(19) **Europäisches Patentamt / European Patent Office / Office européen des brevets**

(11) **EP 2 955 345 B1**

(12) **EUROPEAN PATENT SPECIFICATION**

(45) Date of publication and mention
of the grant of the patent:
**18.12.2019 Bulletin 2019/51**

(21) Application number: **13873380.3**

(22) Date of filing: **30.01.2013**

(51) Int Cl.:
*F01N 3/01* (2006.01)  *B01D 53/50* (2006.01)
*B01D 53/77* (2006.01)  *B03C 3/38* (2006.01)
*F01N 3/02* (2006.01)  *F01N 3/04* (2006.01)
*B01D 53/30* (2006.01)  *B01D 53/92* (2006.01)
*B03C 3/017* (2006.01)  *B03C 3/06* (2006.01)
*B03C 3/41* (2006.01)  *B03C 3/49* (2006.01)
*B01D 53/78* (2006.01)  *F01N 13/00* (2010.01)
*F01N 3/027* (2006.01)

(86) International application number:
**PCT/JP2013/000508**

(87) International publication number:
**WO 2014/118819 (07.08.2014 Gazette 2014/32)**

(54) **MARINE DIESEL ENGINE EXHAUST GAS TREATMENT SYSTEM**

ABGASBEHANDLUNGSSYSTEM FÜR SCHIFFSDIESELMOTOR

SYSTÈME DE TRAITEMENT DES GAZ D'ÉCHAPPEMENT DE MOTEUR DIESEL MARIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.12.2015 Bulletin 2015/51**

(73) Proprietor: **Fuji Electric Co., Ltd.
Kawasaki-shi, Kanagawa 210-9530 (JP)**

(72) Inventors:
• **INUI, Takashi
Kawasaki-shi
Kanagawa 210-9530 (JP)**
• **KAWAKAMI, Hitomi
Kawasaki-shi
Kanagawa 210-9530 (JP)**

(74) Representative: **Appelt, Christian W.
Boehmert & Boehmert
Anwaltspartnerschaft mbB
Pettenkoferstrasse 22
80336 München (DE)**

(56) References cited:
**EP-A2- 1 040 865     WO-A1-2011/065118
JP-A- H05 200 324     JP-A- 2003 104 292
JP-A- 2004 081 933     JP-A- 2004 314 044
JP-A- 2005 066 505     JP-A- 2008 168 212
JP-A- 2009 112 978     JP-A- 2012 192 361
US-A1- 2009 145 126**

## Description

TECHNICAL FIELD

The present invention relates to a marine diesel engine exhaust gas treatment system for treating exhaust gas from a marine diesel engine equipped in a vessel.

BACKGROUND ART

Exhaust gas emitted from a marine diesel engine contains toxic substances such as nitrogen compounds (NOx), sulfur oxides (SOx), and a particulate matter (PM) consisting primarily of carbon. Particularly, the PM is known to cause various health problems when humans inhale it. For this reason, a marine diesel engine equipped in a vessel needs a PM removal apparatus for efficiently removing the PM.

As a PM removal apparatus for a marine diesel engine, there is a method for installing a filter in an exhaust duct. One of the problems with this method is that the filter becomes clogged easily, resulting in significant pressure loss. An electrostatic precipitator, on the other hand, causes less clogging and less pressure loss and can therefore be mounted to an exhaust duct of an internal combustion engine. However, it is difficult for a dry-type electrostatic precipitator to treat such gas components as SOx contained in exhaust gas.

In view of these circumstances, as an apparatus for cleaning exhaust gas emitted from a marine diesel engine to reduce SOx and PM, there exists a conventional apparatus that employs an electrostatic precipitator system. For example, there is proposed a marine exhaust gas treatment apparatus in which electrostatic precipitator means configured by a discharge electrode and dust collecting electrode and filter means for collecting solid particles of exhaust gas are arranged along an exhaust gas flue of a marine diesel engine, the electrostatic precipitator means having seawater spraying means on the pre-stage thereof, and temperature control means is provided to detect the temperature of the exhaust gas and to regulate the temperature by controlling the spray amount of the seawater spraying means so that the temperature of the exhaust gas at the inlet of the electrostatic precipitator means is equal to an acid-dew point temperature (see Patent Document 1, for example).

In addition to the electrostatic precipitator system, there is also proposed an apparatus that cleans combustion exhaust gas emitted from a marine diesel engine to reduce SOx and PM, such as, for example, a wastewater treatment apparatus that has a gas cleaning scrubber for supplying seawater for cleaning to a centrifugal separation unit to remove the soot/dust of the exhaust gas, supplies the resultant seawater that does not contain the soot/dust to an oil removal unit to remove the oil content through a filter, supplies the resultant seawater that does not contain the oil content to a neutralizing unit to neutralize the seawater, and supplies the resultant neutralized seawater to the gas cleaning scrubber again to clean the exhaust gas (see Patent Document 2, for example).

Patent Document 1: Japanese Patent Application Publication No. 2009-52440
Patent Document 2: Japanese Patent Application Publication No. 2004-81933

WO 2011/065118 A1 describes a system for controlling the operation of a desulfurization apparatus, equipped with an electric dust collector for collecting coal ash in an exhaust gas and an absorption column for bringing the dedusted exhaust gas from the electric dust collector into contact with an absorbing liquid so as to allow limestone in the absorbing liquid to absorb SO2 in the dedusted exhaust gas while discharging the desulfurized exhaust gas from which SO2 has been removed, wherein the activity constant of the limestone is calculated based on the SO2 concentration of the dedusted exhaust gas, the SO2 concentration of the desulfurized exhaust gas, the flow rate of the exhaust gas, the limestone concentration of the absorbing liquid, the tank volume of the absorbing liquid having been brought into contact with the dedusted exhaust gas and pooled in the absorption column, and pH of the absorption liquid, and the activation state of the lime stone is determined by comparing the aforesaid limestone activity constant with a preset lime stone activity constant threshold.

DISCLOSURE OF THE INVENTION

The conventional marine exhaust gas treatment apparatus according to Patent Document 1 causes a water cooler thereof to cool the exhaust gas to an acid-dew point temperature at the upstream side of the electrostatic precipitator unit, thereby forms the $SO_2$ into mist and removes this $SO_2$. This conventional technique, however, has some unsolved issues that disposing the mixed fluid of sulfuric acid mist and soot/dust accumulated in a sulfuric acid tank requires extra attention and that it is reasonably costly to treat strongly acidic waste liquid containing soot/dust.

The example of the conventional wastewater treatment apparatus described in Patent Document 2 does not employ the electrostatic precipitator system but employs a configuration in which exhaust gas emitted from a marine diesel engine is supplied to a gas cleaning scrubber to clean the exhaust gas with seawater and remove the soot/dust and SOx contained in the exhaust gas. However, this conventional technique uses a large amount of seawater and therefore has an unsolved issue that a complex water treatment apparatus for treating wastewater containing soot/dust is required.

The present invention was contrived in view of these unsolved issues of the foregoing conventional marine exhaust gas treatment apparatus and wastewater treatment apparatus. An object of the present invention is to provide a marine diesel engine exhaust gas treatment system that is capable of not only reliably removing a PM and SOx of exhaust gas emitted from a marine diesel engine, but also reducing the amount of seawater used, the load of a wastewater treatment, and the amount of wastes generated, as well as reducing the space for installing the devices configuring the system.

The present invention relates to a system according to independent claim 1. Preferred embodiments are described in the dependent claims 2 to 14. In order to accomplish the above object, a marine diesel engine exhaust gas treatment system for treating exhaust gas resulting from combustion in a marine diesel engine equipped in a vessel is provided, the marine diesel engine exhaust gas treatment system comprising:

an electrostatic precipitator apparatus that is configured to collect a particulate matter (PM) of exhaust gas emitted from the marine diesel engine;
a seawater scrubber that is configured to spray seawater to the exhaust gas from which the particulate matter is removed by the electrostatic precipitator apparatus (7), to remove sulfur oxides from the exhaust gas;
an exhaust gas component detector that is configured to detect a component of the exhaust gas prior to and after the treatment by the electrostatic precipitator apparatus and the seawater scrubber, wherein the exhaust gas component detector is configured to detect the particulate matter concentration of the exhaust gas and to detect the sulfur oxides concentration of the exhaust gas;
wherein the exhaust gas component detector is configured by first and second laser analyzers that are placed respectively at an inlet side and an outlet side of the electrostatic precipitator apparatus and a third laser analyzer placed at an outlet side of the seawater scrubber, wherein the first laser analyzer is configured to detect a particulate matter concentration, the second laser analyzer is configured to detect a particulate matter concentration and a concentration, and the third laser analyzer is configured to detect a particulate matter concentration, a concentration, and a concentration,
a seawater component regulator that is configured to recover the seawater sprayed by the seawater scrubber, to perform component regulation on the recovered seawater;
a seawater circulator that is configured to return, to the seawater scrubber, the seawater that is subjected to the component regulation by the seawater component regulator;
a water quality measurement unit that is configured to monitor a water quality of the seawater in the seawater component regulator, wherein the water quality measurement unit has a pH meter configured to measure a pH and an oil content meter configured to measure an oil content concentration;
an exhaust gas treatment controller that is configured to regulate an operating state of the electrostatic precipitator apparatus and an operating state of the seawater scrubber in such a manner that the particulate matter concentration and the sulfur oxides concentration of the treated exhaust gas that is detected by the exhaust gas component detector falls within a prescribed range; and
a seawater component controller that is configured to regulate an operating state of the seawater component regulator in such a manner that a seawater component detected by the water quality measurement unit falls within a prescribed range, wherein the seawater component controller is configured to control the seawater component regulator in such a manner that the oil content concentration and the pH fall within a set range.

According to the present invention, a PM of exhaust gas emitted from a marine diesel engine is removed by the electrostatic precipitator apparatus, and SOx of the exhaust gas is removed by the seawater scrubber. Thus, removal of the PM and SOx can be executed reliably.

Moreover, the seawater scrubber sprays seawater onto the exhaust gas to remove SOx, and the seawater containing SOx is subjected to component regulation such as oil content separation and pH regulation by the seawater component regulator before being returned to the seawater scrubber by the seawater circulator. Such a configuration enables cyclical use of the seawater by the seawater scrubber, significantly reducing the amount of seawater used and minimizing the impacts on the surrounding environment.

Furthermore, the PM of the exhaust gas is removed by the electrostatic precipitator apparatus, and subsequently SOx of the exhaust gas is removed by the seawater scrubber, reducing the amount of seawater used, the load of a wastewater treatment, and the amount of wastes generated, and minimizing the space for installing the devices configuring the system. Accordingly, the impacts on the existing cargo/facility spaces of the vessel can be minimized.

BRIEF DESCRIPTION OF THE DRAWINGS

Fig. 1 is a system configuration diagram showing an embodiment of a marine diesel engine exhaust gas treatment system according to the present invention;
Fig. 2 is an overall configuration diagram showing a specific configuration of an electrostatic precipitator apparatus without a part of an outer cylinder;
Fig. 3 is a perspective view showing main parts of the electrostatic precipitator apparatus;

Fig. 4 is a block diagram showing a specific configuration of an electrostatic precipitator apparatus controller;

Fig. 5 is a flowchart showing an example of a dust collection feedforward control process executed by a dust collection control processing unit shown in Fig. 4;

Fig. 6 is a flowchart showing an example of a dust collection feedback control process executed by the dust collection control processing unit shown in Fig. 4;

Fig. 7 is a flowchart showing an example of an operating state monitoring process executed by the dust collection control processing unit shown in Fig. 4;

Fig. 8 is a configuration diagram showing a specific configuration of a seawater scrubber;

Fig. 9 is a flowchart showing an example of a seawater component control process executed by a seawater component controller;

Fig. 10 is a flowchart showing an example of a scale removal process executed by the seawater component controller;

Fig. 11 is a flowchart showing an example of an operating state monitoring process executed by the seawater component controller;

Fig. 12 is a flowchart showing an example of a circulated seawater monitoring process executed by the seawater component controller;

Fig. 13 is a cross-sectional diagram showing a specific configuration of a first gas analyzer;

Fig. 14 is a cross-sectional diagram showing a specific configuration of a second gas analyzer;

Fig. 15 is a cross-sectional diagram showing a specific configuration of a third gas analyzer;

Fig. 16 is a block diagram showing a specific configuration of a spray controller of a scrubber controller;

Fig. 17 is a flowchart showing an example of an operating state monitoring process executed by the scrubber controller; and

Fig. 18 is a block diagram showing an overall configuration of a control system of the marine diesel engine exhaust gas treatment system.

BEST MODE FOR CARRYING OUT THE INVENTION

Embodiments of the present invention are described hereinafter with reference to the drawings.

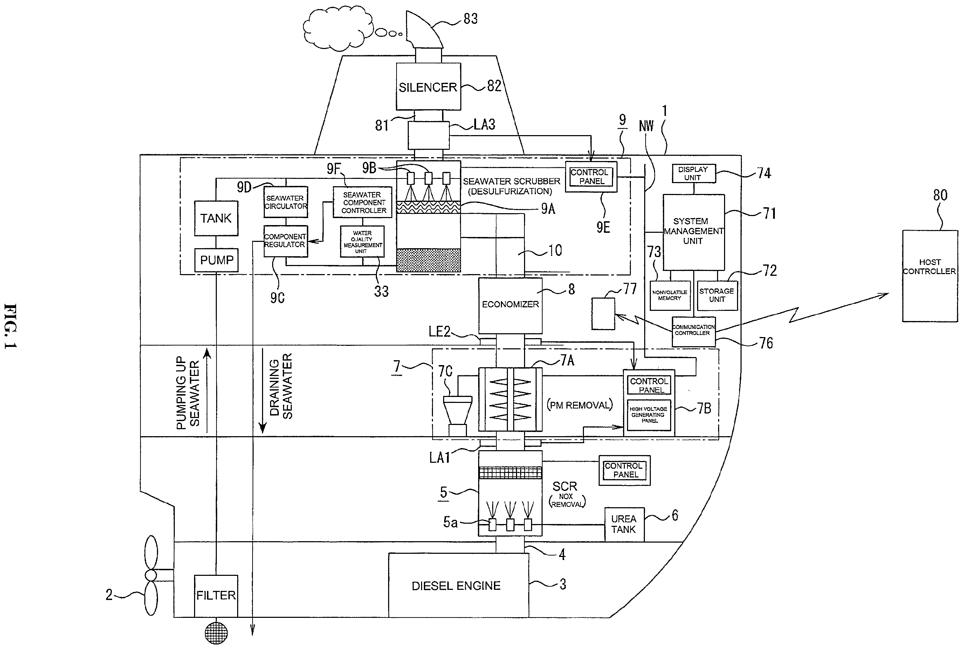

Fig. 1 is an overall configuration diagram showing a first embodiment of the present invention.

In the diagram, reference numeral 1 represents, for example, a relatively large vessel of a total of several thousand tons or more. This vessel 1 has a main diesel engine that rotary drives a propeller 2 such as a screw propeller, and a marine diesel engine 3 such as an auxiliary diesel engine providing power and the like within the vessel.

The marine diesel engine 3 emits exhaust gas through fuel combustion. As described above, the exhaust gas contains nitrogen oxides (NOx), sulfur oxides (SOx), and a particulate matter (PM) consisting primarily of carbon.

The exhaust gas emitted from the marine diesel engine 3 is first supplied to a NOx removal device 5 through a piping system 4. The NOx removal device 5 supplies ammonia, a reducing agent, to a titanium-vanadium-based NOx removal catalyst provided in an exhaust gas passage. This embodiment employs an ammonia selective catalytic reduction process (SCR) that decomposes the nitrogen oxides (NOx) of the exhaust gas into water and nitrogen by causing the ammonia to react therewith. The ammonia to be supplied to the catalyst is generated by spraying, through injection nozzles 5a, a liquid reducing agent such as urea water obtained by mixing air with urea water accumulated in a urea tank 6, and decomposing the urea.

The exhaust gas with NOx removed, which is output from the NOx removal device 5, is supplied to an electrostatic precipitator apparatus 7. This electrostatic precipitator apparatus 7 removes the PM consisting primarily of carbon and contained in the exhaust gas.

The electrostatic precipitator apparatus 7 is suitable for collecting a PM having a particle diameter of 100 $\mu$m, especially a suspended particulate matter (SPM) having a particle diameter of 10 $\mu$m, out of soot/dust that consists primarily of carbon and is contained in the exhaust gas of the marine diesel engine 3.

This electrostatic precipitator apparatus 7 is configured by, as shown in Fig. 1, an electrostatic precipitator apparatus main body 7A, an electrostatic precipitator apparatus controller 7B that controls high voltages or currents supplied to the electrostatic precipitator apparatus main body 7A, and a cyclone apparatus 7C for recovering and discarding the PM collected by the electrostatic precipitator apparatus main body 7A.

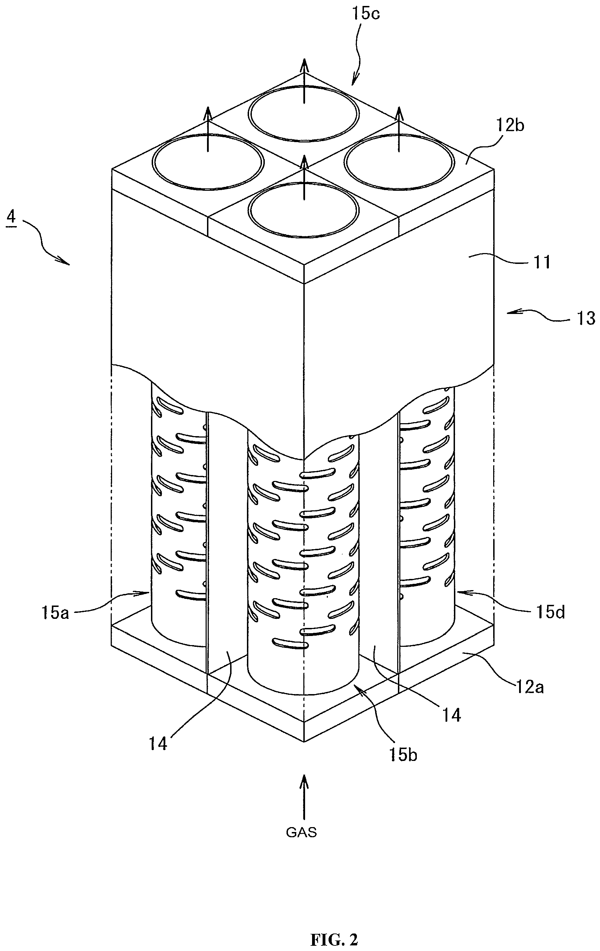

As shown in Fig. 2, the electrostatic precipitator apparatus main body 7A has a casing 13 that is configured by a square cylindrical, conductive external case 11 and end plates 12a and 12b that are provided on axial end surfaces of the external case 11. Electrode accommodating portions 15a to 15d, which are divided into four by partition plates 14, are formed inside the casing 13.

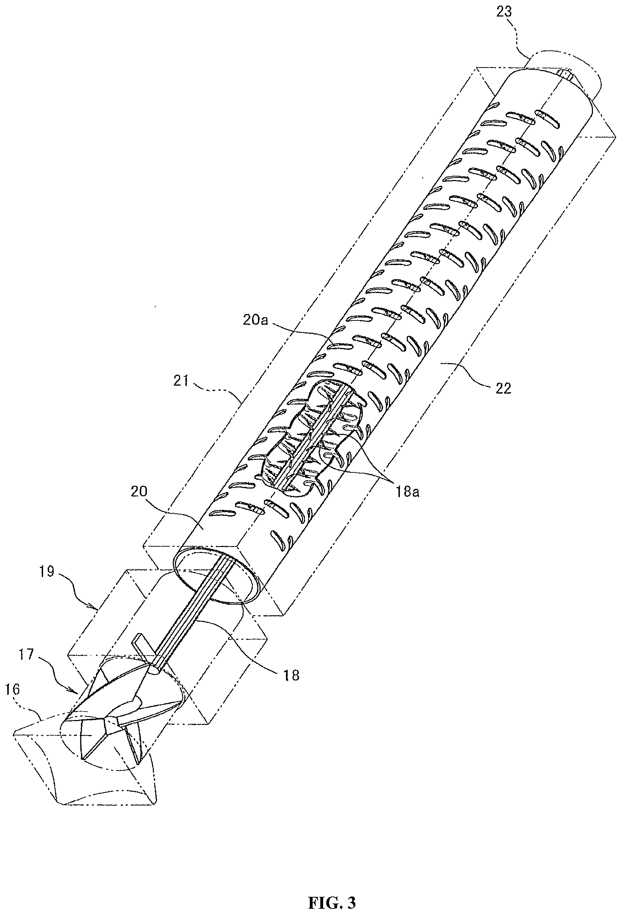

As shown in Fig. 3, each of the electrode accommodating portions 15a to 15d has a truncated pyramidal, cylindrical gas introducing portion 16 for introducing PM-containing gas supplied from the NOx removal device 5, a swirl flow forming portion 17 that feeds the PM-containing gas that is formed at the downstream side of the gas introducing portion 16, in the form of a swirl flow, an electrode support 19 that supports a discharge electrode 18 which, when cross-sectionally viewed, has twelve planes and is placed at the downstream side of the swirl flow forming portion 17, a circular cylindrical electrode 20 made of, for example, stainless steel, which is placed at the downstream side of the electrode support 19 and covers the discharge electrode 18 with a predetermined radial distance therewith, a casing electrode 21 configured by the partition plates 14 and external case 11 surrounding and supporting the cylindrical electrode 20, and a discharge electrode support 23 placed at the lowermost stream side.

A DC high-voltage source of approximately $10^3$ to $10^5$ volts is connected between the discharge electrode 18 and the cylindrical electrode 20 and casing electrode 21, with the discharge electrode 18 taken as the negative electrode and the cylindrical electrode 20 and casing electrodes 21 as the positive electrode, wherein the positive electrode is grounded. According to this configuration, when the PM-containing gas is supplied in the form of a swirl flow between the discharge electrode 18 and the cylindrical electrode 20, the PM of the PM-containing gas is charged by a corona discharge. Consequently, the Coulomb force acts on the PM due to an electric field between the discharge electrode 18 and the cylindrical electrode 20, causing the PM to travel toward the cylindrical electrode 20. Due to its mass, the PM passes through through-holes 20a of the cylindrical electrode 20 by means of inertial force and is guided to a collecting space 22, which is a half-closed space formed between the cylindrical electrode 20 and the casing electrode 21.

Because the collecting space 22 has an extremely moderate flow distribution, the PM is rarely affected by the flow distribution. Under electrostatic image force of its own electrical charge and the potential difference between the cylindrical electrode 20 and the casing electrode 21, the PM moves and adheres to the outer circumferential surface of the cylindrical electrode 20 and the inner circumferential surface of the casing electrode 21 and is thereby collected. Note that a numerical analysis confirms that the velocity of the PM in most of the regions of the collecting space 22 is approximately 1/20 to 1/10 and locally approximately 1/4 of the velocity of the main stream of the PM-containing gas flowing within a gas flow passage in the cylindrical electrode 20.

According to the electrostatic precipitator apparatus main body 7A, the PM-containing gas may simply be let flow through the gas flow passage between the discharge electrode 18 and the cylindrical electrode 20, and steam extraction means such as an air blower does not have to be provided. In addition, because a dumper or the like that blocks the flow of the PM-containing gas does not need to be provided, pressure loss of the PM-containing gas can be lowered. The diameter of the through-holes 20a formed in the cylindrical electrode 20 can be set large regardless of the particle diameter of the PM, enabling a reduction of pressure loss. Moreover, the PM is collected at the outer circumferential surface of the cylindrical electrode 20 and the inner circumferential surface of the casing electrode 21 that configure the collecting space 22, allowing collection of a large amount of PM in accordance with the surface areas of the both electrodes 20 and 21. Furthermore, the through-holes 20a are designed to cause as little clogging as possible, reliably preventing collection problems caused by clogging. Also, the low flow distribution of the collecting space 22 causes less re-entrainment of the collected PM. Because movable units such as a dumper and an air blower are not provided, the risk of system failure is extremely low. The PM collected in the collecting space 22 is recovered by the cyclone apparatus 7C shown in Fig. 1, reduced in volume by a compressor, not shown, at an outlet of the cyclone apparatus 7C, and stored in a waste container such as a drum.

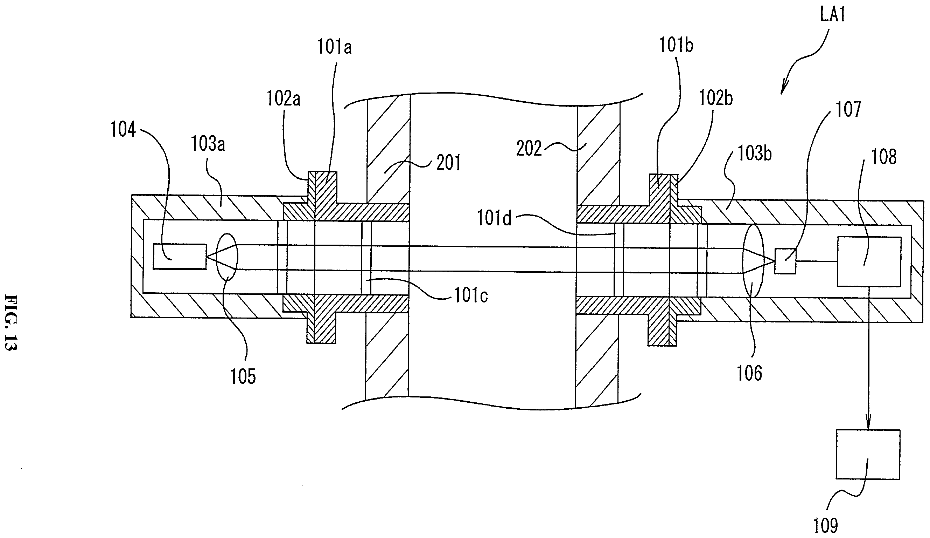

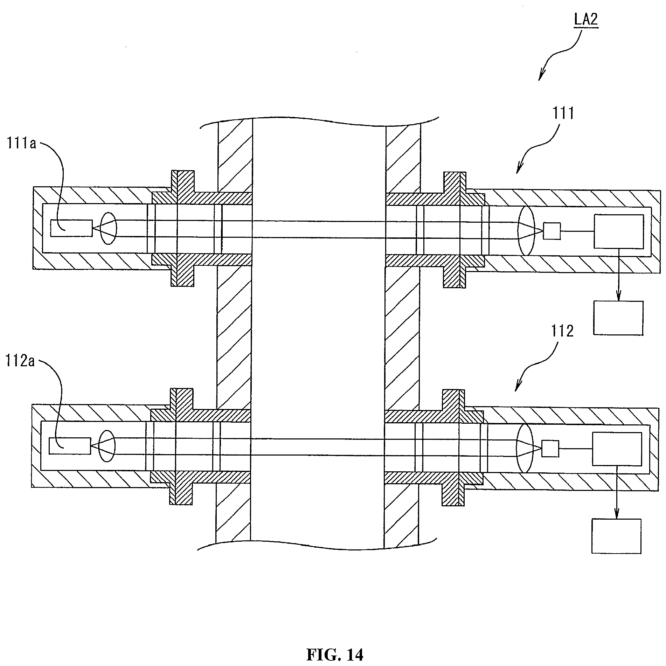

At the inlet side of the electrostatic precipitator apparatus main body 7A, there is placed a first laser analyzer LA1, which has a configuration shown in Fig. 13 as described hereinafter, as an exhaust gas component detector that uses a visible laser to detect a PM concentration of the exhaust gas. An outlet piping system of the electrostatic precipitator apparatus main body 7A is provided with a second laser analyzer LA2, which has a configuration shown in Fig. 14 as described hereinafter, as an exhaust gas component detector that uses a visible laser to detect a PM concentration of the exhaust gas and a mid-infrared region laser to detect a $SO_2$ concentration of the exhaust gas.

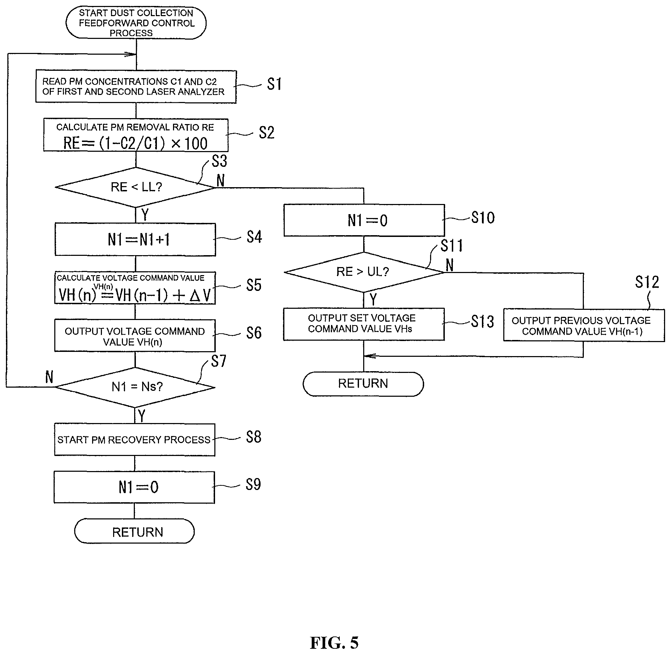

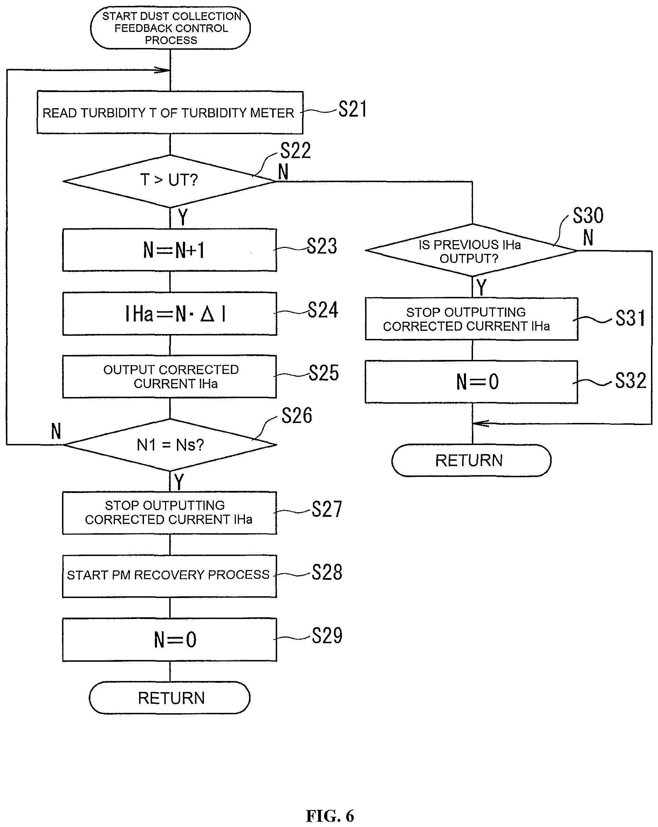

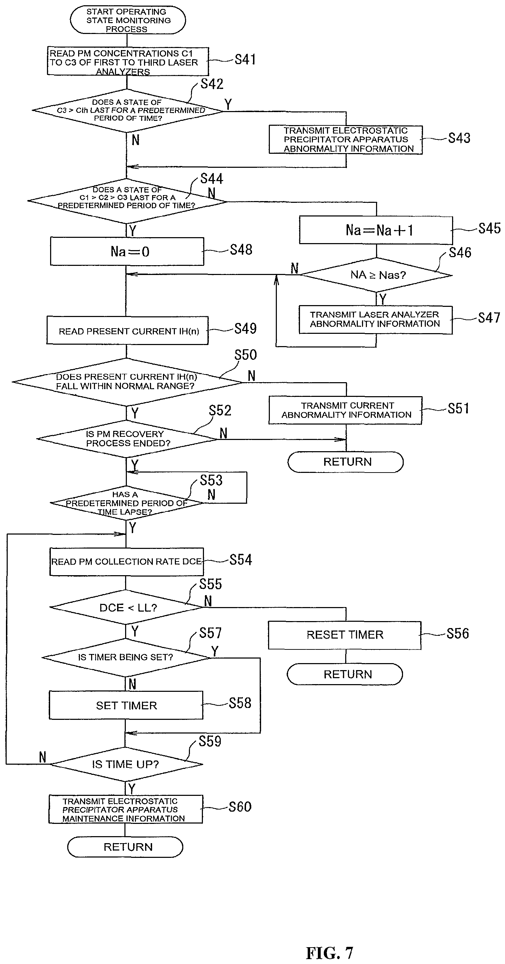

The electrostatic precipitator apparatus controller 7B executes a dust collection feedforward control process shown in Fig. 5 described hereinafter, a dust collection feedback control process shown in Fig. 6 described hereinafter, and a dust collecting apparatus operating state monitoring process shown in Fig. 7 described hereinafter.

In the dust collection feedforward control process shown in Fig. 5, the electrostatic precipitator apparatus controller 7B controls currents supplied to the electrodes in such a manner that a PM removal rate (i.e., a PM collection rate) that is calculated based on the PM concentrations of the exhaust gas detected by the first laser analyzer LA1 and the second laser analyzer LA2 falls within a preset prescribed range.

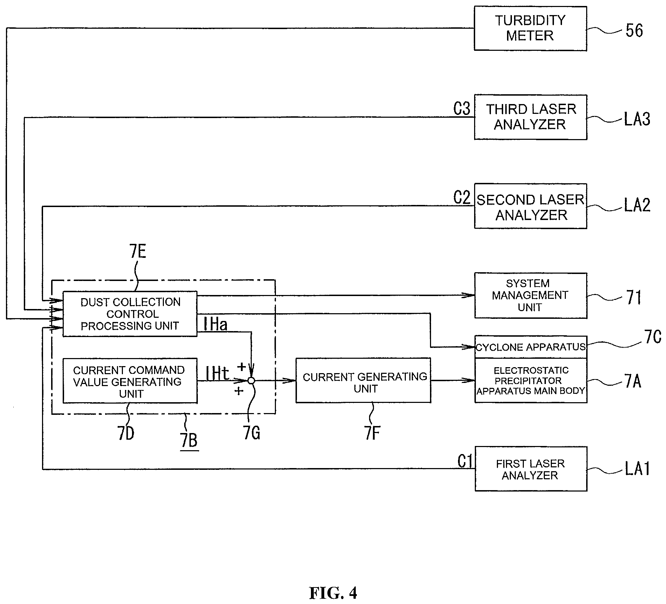

A specific configuration of the electrostatic precipitator apparatus controller 7B has a current command value generating unit 7D, a dust collection control processing unit 7E, and a current generating unit 7F, as shown in Fig. 4.

The current command value generating unit 7D generates a DC high voltage of approximately $10^3$ to $10^5$ volts between the discharge electrode 18 and the cylindrical electrode 20 and casing electrode 21 of the electrostatic precipitator apparatus main body 7A, with the discharge electrode 18 taken as the negative electrode and the cylindrical electrode 20 and casing electrode 21 as the positive electrode, and generates a current command value IHt for supplying a current to the electrostatic precipitator apparatus main body 7A.

The dust collection control processing unit 7E executes the dust collection feedforward control process shown in Fig. 5 to calculate a PM collection rate DCE and calculate a corrected current IHa in such a manner that the calculated PM collection rate DCE does not fall below a dust collection rate threshold DCEth. Specifically, the dust collection control processing unit 7E receives input of PM concentrations C1, C2 and C3 that are detected by the first laser analyzer LA1, second laser analyzer LA2, and third laser analyzer LA3, respectively. The dust collection control processing unit 7E calculates the PM removal rate, i.e., the PM collection rate DCE, based on the PM concentrations C1 and C2, calculates the corrected current IHa in such a manner that the calculated PM collection rate DCE does not fall below the dust collection rate threshold DCEth, and outputs the corrected current IHa to an adder 7G that adds the calculated corrected current IHa to the current command value IHt that is output from the current command value generating unit 7D.

Also, in the dust collection feedback control process shown in Fig. 6, the electrostatic precipitator apparatus controller 7B controls currents to be supplied to the electrodes in such a manner that the concentration of a turbid component (turbidity) such as soot/dust in the recovered seawater inside a piping system 55, which is measured by a turbidity meter 58 of a water quality measurement unit 33 described hereinafter, falls within a preset prescribed range.

The dust collection control processing unit 7E executes the dust collection feedback control process shown in Fig. 6 to measure a turbidity T, and calculates the corrected current IHa in such a manner that the calculated turbidity T does not exceed an upper limit turbidity threshold UT.

Specifically, the turbidity T measured by the turbidity meter 58 is input to the dust collection control processing unit 7E. Then, the dust collection control processing unit 7E calculates the corrected current IHa in such a manner that the turbidity T does not exceed the upper limit turbidity UT, and outputs the calculated corrected current IHa to the adder 7G that adds the corrected current IHa to the current command value IHt that is output from the current command value generating unit 7D.

In addition, as shown in Fig. 4, the dust collection control processing unit 7E of the electrostatic precipitator apparatus controller 7B transmits a current PM collection rate DCE calculated in the dust collection control process and various abnormality information generated in a dust collecting apparatus abnormality monitoring process to a system management unit 71, described hereinafter, via a network NW.

The dust collection feedforward control process shown in Fig. 5, the dust collection feedback control process shown in Fig. 6, and the dust collecting apparatus operating state monitoring process shown in Fig. 7 are now described hereinafter in detail with reference to the respective drawings.

First, the dust collection feedforward control process executed by the electrostatic precipitator apparatus controller 7B is described in detail with reference to the flowchart shown in Fig. 5.

As shown in Fig. 5, first, in step S1 the dust collection control processing unit 7E reads the PM concentrations C1 and C2 that are detected by the first and second laser analyzers LA1 and LA2 placed at the inlet side and outlet side of the electrostatic precipitator apparatus main body 7A.

In the next step S2, the dust collection control processing unit 7E calculates the PM collection rate DCE of the electrostatic precipitator apparatus main body 7A by means of the following equation (1) based on the PM concentrations C1 and C2 detected by the laser analyzers LA1 and LA2, and moves on to step S3.

$$\mathrm{DCE} = (1 - \mathrm{C2/C1}) \times 100 \qquad \ldots\ldots(1)$$

In step S3, the dust collection control processing unit 7E determines whether the calculated PM collection rate DCE is less than the PM collection rate threshold DCEth representing the lower limit of the PM collection rate. When DCE is less than DCEth, the dust collection control processing unit 7E determines that the PM collection rate DCE has declined, and moves on to step S4 to increment the number of corrections N by "1," and then moves on to step S5.

In step S5, the dust collection control processing unit 7E calculates the corrected current IHa by multiplying the number of corrections N by a preset reference corrected current $\Delta$I, and outputs the corrected current IHa to the adder 7G in the next step S6, and then moves on to step S7.

In step S7, the dust collection control processing unit 7E determines whether the number of corrections N reaches the limited number of corrections Ns, which is set beforehand. When N is less than Ns, the dust collection control processing unit 7E returns to step S1. When N is equal to Ns, the dust collection control processing unit 7E determines that the PM collection rate DCE does not improve even when current correction is performed, and moves on to step S8 to stop outputting the corrected current IHa. The dust collection control processing unit 7E then moves on to step S9. Note that a value obtained by multiplying a steady current based on the current command value IHt of the current generating unit 7F by the reference corrected current $\Delta$I and limited number of corrections Ns is added to the limited number of corrections Ns, and the resultant value is set so as not to exceed a predetermined current threshold. In step S9, the dust collection control processing unit 7E activates the cyclone apparatus 7C that executes a PM recovery process, moves on to step S10 to clear the number of corrections N to "0," and returns to step S1.

On the other hand, when the result of the determination in step S3 is DCE $\geq$ DCEth, the dust collection control processing unit 7E determines that the PM collection rate DCE exceeds the preset dust collection rate threshold DCEth, and then moves on to step S11.

In step S11, the dust collection control processing unit 7E determines whether the corrected current IHa is output during the previous process. When the corrected current IHa is not output during the previous process, the dust collection control processing unit 7E returns to step S1. When the corrected current IHa is output during the previous process, the dust collection control processing unit 7E moves on to step S12. In step S12, the dust collection control processing unit 7E stops outputting the corrected current IHa, moves on to the next step S13 to clear the abovementioned number of corrections N to "0," and then returns to step S1.

Next, the dust collection feedback control process executed by the electrostatic precipitator apparatus controller 7B is described in detail with reference to the flowchart shown in Fig. 6.

As shown in Fig. 6, first, in step S21, the dust collection control processing unit 7E reads the turbidity T measured by the turbidity meter 58 connected to a piping system 53.

In the next step S22, the dust collection control processing unit 7E determines whether the read turbidity T exceeds the upper limit turbidity threshold UT. When the turbidity T is greater than the upper limit turbidity threshold UT, the dust collection control processing unit 7E determines that a large amount of soot/dust is contained in the recovered seawater and moves on to step S23 to increment the number of corrections N by "1." The dust collection control processing unit 7E then proceeds to step S24.

In this step S24, the dust collection control processing unit 7E calculates the corrected current IHa by multiplying the number of corrections N by the preset reference corrected current $\Delta I$, outputs the corrected current IHa to the adder 7G in the next step S25, and then moves on to step S26.

In step S26, the dust collection control processing unit 7E determines whether the number of corrections N reaches the limited number of corrections Ns, which is set beforehand. When the number of corrections N is less than the limited number of corrections Ns, the dust collection control processing unit 7E returns to step S21. When the number of corrections N is equal to the limited number of corrections Ns, the dust collection control processing unit 7E determines that the turbidity T does not improve even when current correction is performed, and moves on to step S27 to stop outputting the corrected current IHa. The dust collection control processing unit 7E then moves on to step S28. Note that a value obtained by multiplying a steady current based on the current command value IHt of the current generating unit 7F by the reference corrected current $\Delta I$ and limited number of corrections Ns is added to the limited number of corrections Ns, and the resultant value is set so as not to exceed a predetermined current threshold.

In step S28, the dust collection control processing unit 7E activates the cyclone apparatus 7C that executes a PM recovery process, moves on to step S29 to clear the number of corrections N to "0," and returns to step S21.

On the other hand, when the result of the determination in step S22 is $T \le UT$, the dust collection control processing unit 7E determines that the turbidity of the seawater recovered from the seawater scrubber 9 is normal, and then moves on to step S30.

In step S30, the dust collection control processing unit 7E determines whether the corrected current IHa is output during the previous process. When the corrected current IHa is not output during the previous process, the dust collection control processing unit 7E returns to step S21. When the corrected current IHa is output during the previous process, the dust collection control processing unit 7E moves on to step S31. In step S31, the dust collection control processing unit 7E stops outputting the corrected current IHa, moves on to the next step S32 to clear the abovementioned number of corrections N to "0," and returns to step S21.

The dust collecting apparatus operating state monitoring process executed by the electrostatic precipitator apparatus controller 7B is now described in detail with reference to the flowchart shown in Fig. 7.

As shown in Fig. 7, first, in step S41, the dust collection control processing unit 7E reads the PM concentrations C1, C2 and C3 detected by the first, second and third laser analyzers LA1, LA2 and LA3.

In the next step S42, the dust collection control processing unit 7E determines whether a situation in which the PM concentration C3 detected by the third laser analyzer LA3 exceeds a preset PM concentration threshold Cth lasts for a predetermined period of time or not. When the situation in which the PM concentration C3 is greater than the PM concentration threshold Cth lasts for the predetermined period of time, the dust collection control processing unit 7E determines that the electrostatic precipitator apparatus 7 has an abnormality, and then moves on to step S43. In step S43, the dust collection control processing unit 7E transmits electrostatic precipitator apparatus abnormality information to the system management unit 71 via the network NW, and then proceeds to step S44.

When it is determined in step S42 that the situation in which $C3 \le Cth$ or $C3 > Cth$ does not last for the predetermined period of time, the dust collection control processing unit 7E proceeds directly to step S44. In step S44, the dust collection control processing unit 7E determines whether the first PM concentration C1, the second PM concentration C2, and the third PM concentration are reduced in this descending order or not. The purpose of such determination is to determine whether the laser analyzers LA1, LA2 and LA3 are normal or not. When $C1 > C2 > C3$ is not established, it means that there is a possibility that any irrelevant laser analyzer has an abnormality. Therefore, the dust collection control processing unit 7E proceeds to step S45. In step S45, the dust collection control processing unit 7E increments an abnormality duration variable Na by "1" and moves on to step S46 to determine whether the abnormality duration variable Na reaches a preset threshold Nas. When the result of this determination shows Na < Nas, the dust collection control processing unit 7E proceeds to step S49. When the abnormality duration variable Na is equal to the threshold Nas, the dust collection control processing unit 7E determines that any of the laser analyzers has an abnormality, and moves on to step S47. In step S47, the dust collection control processing unit 7E transmits laser analyzer abnormality information to the system management unit 71 via the network NW, and then moves on to step S49.

However, when it is determined in step S44 that the situation in which C1 > C2 > C3 is established or in which C1 > C2 > C3 is not established does not last for the predetermined period of time, the dust collection control processing unit 7E proceeds to step S48 to clear the abnormality duration variable Na to "0," and then proceeds to step S49.

In this step S49, the dust collection control processing unit 7E reads a present current IH (n), and determines in the next step S50 whether the read present current IH (n) falls within a normal range or not. When the current IH (n) is outside the normal range, the dust collection control processing unit 7E moves on to step S51 to transmit current abnormality information indicating an abnormality of the current generating unit 7F to the system management unit 71 via the network NW, and then moves on to step S52.

When it is determined in step S50 that the current IH (n) is normal, the dust collection control processing unit 7E proceeds directly to step S52.

In step S52, the dust collection control processing unit 7E determines whether the cyclone apparatus 7C has been activated and the PM recovery process has ended or not. When it is determined that the PM recovery process has not yet ended, the dust collection control processing unit 7E returns to step S41. When it is determined in step S52 that the PM recovery process has ended, the dust collection control processing unit 7E proceeds to step S53 to determine whether a predetermined period of time has elapsed or not since the end of the PM recovery process. When it is determined that the predetermined period of time has not elapsed, the dust collection control processing unit 7E waits until the predetermined period of time elapses. When it is determined in step S53 that the predetermined period of time has elapsed, the dust collection control processing unit 7E proceeds to step S54.

In this step S54, the dust collection control processing unit 7E reads the PM collection rate DCE calculated in the dust collection feedforward control process shown in Fig. 5, and proceeds to the next step S55 to determine whether or not the read PM collection rate DCE is less than a preset dust collection rate lower limit LL. When the result of the determination is DCE ≥ LL, the dust collection control processing unit 7E determines that the electrostatic precipitator apparatus main body 7A is normal, and proceeds to step S56. In step S56, the dust collection control processing unit 7E resets a timer, described hereinafter, and returns to step S41.

When, on the other hand, the result of the determination in step S55 is DCE < LL, the dust collection control processing unit 7E determines that the PM collection rate is declining in an abnormal manner, and proceeds to step S57. In this step S57, the dust collection control processing unit 7E determines whether the timer is being set or not. When it is determined that the timer is not set, the dust collection control processing unit 7E proceeds to step S58 to set the timer, and then proceeds to step S59. When the timer is being set, the dust collection control processing unit 7E proceeds directly to step S59.

In this step S59, the dust collection control processing unit 7E determines whether or not the time of the timer is up. When the time of the timer is not up yet, the dust collection control processing unit 7E returns to step S54. When the time of the timer is up, the dust collection control processing unit 7E proceeds to step S60. In this step S60, the dust collection control processing unit 7E transmits PM collection rate decline abnormality information indicating an abnormal decline in the PM collection rate to the system management unit 71 via the network NW, and then returns to step S41.

Subsequently, the dust collection feedforward control process shown in Fig. 5, the dust collection feedback process shown in Fig. 6, and the dust collecting apparatus operating state monitoring process shown in Fig. 7 are described in further detail along with the operations of the electrostatic precipitator apparatus main body 7A.

As described above, the dust collection control processing unit 7E executes the dust collection forward control process shown in Fig. 5, and thereby calculates the PM collection rate DCE by means of the foregoing equation (1) based on the PM concentrations C1 and C2 detected by the laser analyzers LA1 and LA2 placed at the inlet side and outlet side of the electrostatic precipitator apparatus main body 7A.

When the calculated PM collection rate DCE is equal to or greater than the PM collection rate threshold DCEth, the dust collection control processing unit 7E determines that PM collection is performed normally by the electrostatic precipitator apparatus main body 7A, and supplies the current command value IHt generated by the current command value generating unit 7D directly to the current generating unit 7F. Then, the current generating unit 7F supplies a current corresponding to the current command value IHt to the electrostatic precipitator apparatus main body 7A, and this current is applied between the discharge electrode 18 and the cylindrical electrode 20 and casing electrode 21 of the electrostatic precipitator apparatus main body 7A, with the discharge electrode 18 as the negative electrode.

Therefore, when the PM-containing gas is supplied in the form of a swirl flow between the discharge electrode 18 and the cylindrical electrode 20, the PM of the PM-contained gas is charged by a corona discharge. Consequently, the Coulomb force acts on the PM due to an electric field between the discharge electrode 18 and the cylindrical electrode 20, causing the PM to travel toward the cylindrical electrode 20. Due to its mass, the PM passes through the through-holes 20a of the cylindrical electrode 20 by means of inertial force and is guided to the collecting space 22, which is a half-closed space formed between the cylindrical electrode 20 and the casing electrode 21.

Because the collecting space 22 has an extremely moderate flow distribution, the PM is rarely affected by the flow distribution. Under electrostatic image force of its own electrical charge and the potential difference between the cylindrical electrode 20 and the casing electrode 21, the PM moves and adheres to the outer circumferential surface of the cylindrical electrode 20 and the inner circumferential surface of the casing electrode 21 and is thereby collected.

In a case where the PM collection rate DCE drops to below the PM collection rate threshold DCEth while this PM collection state lasts, a temporary increase in the PM concentration in the PM-containing gas is considered. In such a case, moving from step S3 to step S4 shown in Fig. 5, the dust collection control processing unit 7E increments the number of corrections N by "1," calculates the corrected current IHa by multiplying the number of corrections N by the reference corrected value $\Delta$I, and supplies the calculated corrected current IHa to the adder 7G.

Consequently, the corrected current IHa is added to the current command value IHt that is output from the current command value generating unit 7D, increasing the current IH generated by the current generating unit 7F.

At this moment, the corrected current IHa increases gradually while the PM collection rate DCE is lower than the PM collection rate threshold DCEth. However, the increase in the corrected current IHa is set such that the corrected current IHa does not exceed a preset current threshold. Such a configuration can prevent the occurrence of spark (short circuit) between the discharge electrode 18 and the cylindrical electrode 20 that is generated as a result of an increase in the current IH.

In a case where the PM collection rate recovers as a result of an increase in current due to this corrected current IHa, the dust collection control processing unit 7E moves from step S3 to step S12 through step S11, to stop outputting the corrected current IHa. In the next step S13, the dust collection control processing unit 7E clears the number of corrections N to 0. Thus, the corrected current IHa is no longer added to the current command value IHt by the adder 7G. As a result, the current generating unit 7F restores the state in which a steady current based on the current command value IHt is supplied.

However, when a situation where the PM collection rate DCE is below the PM collection rate threshold DCEth continues even after repeatedly increasing the corrected current IHa and increasing the current supplied from the current generating unit 7F, and when the number of corrections N reaches the preset number of corrections threshold Ns, the dust collection control processing unit 7E determines that the PM collection rate DCE is reduced due to an increase in the amount of PM collected in the collecting space 22. Consequently, moving from step S7 to step S8, the dust collection control processing unit 7E stops outputting the corrected current IHa, and proceeds to step S9 to cause the cyclone apparatus 7C to start the PM recovery process.

In this dust collection feedforward control process, the PM collection rate DCE of the electrostatic precipitator apparatus main body 7A is controlled to be equal to or greater than the PM collection rate threshold DCEth.

Note that, even when the PM collection rate DCE is equal to or greater than the PM collection rate threshold DCEth, the electrostatic precipitator apparatus controller 7B executes the dust collection feedback control process shown in Fig. 6 as long as the turbidity T read by the dust collection control processing unit 7E exceeds the upper limit turbidity threshold UT. In other words, the dust collection feedback control process to be executed is put priority over the dust collection feedforward control process.

In addition, the dust collecting apparatus operating state monitoring process shown in Fig. 7 is executed for such operating state of the electrostatic precipitator apparatus main body 7A. Therefore, when a state in which the PM concentration C3 detected by the third laser analyzer LA3 provided in the outlet piping system of the seawater scrubber 9 exceeds the PM concentration threshold Cth lasts for a predetermined period of time, the dust collection control processing unit 7E determines that there is an abnormality in the electrostatic precipitator apparatus 7, and consequently transmits electrostatic precipitator apparatus abnormality information to the system management unit 71. In a case where the PM concentrations C1, C2 and C3 detected by the three laser analyzers LA1, LA2 and LA3 are reduced in this descending order, the dust collection control processing unit 7E determines that one of the laser analyzers LA1, LA2 and LA3 is abnormal, and transmits laser analyzer abnormality information to the system management unit 71.

In addition, when the current IH to be supplied by the current generating unit 7F is outside a predetermined upper limit range, the dust collection control processing unit 7E determines that a short circuit, ground fault, or sky fault has occurred, stops supplying currents to the electrostatic precipitator apparatus main body 7A, and transmits current abnormality information to the system management unit 71.

In addition to the dust collection feedforward control process, the dust collection feedback control process, and the dust collecting apparatus operating state monitoring process, the dust collection control processing unit 7E executes a data transmission process for transmitting to the system management unit 71 operation data composed of the PM collection rate DCE and corrected current IHa that are calculated on a regular basis. Therefore, the operation data that are received by the system management unit 71 can be accumulated in a data accumulation unit 72, thereby accumulating the operation data of the electrostatic precipitator apparatus 7.

Furthermore, although the cyclone apparatus 7C is activated to perform a PM recovery process, when the PM collection rate DCE does not seem to recover for a predetermined period of time immediately after the end of the PM recovery process, the dust collection control processing unit 7E determines that an abnormality such as a decrease in the PM collection rate has occurred and that maintenance work needs to be performed on the electrostatic precipitator apparatus 7, and transmits maintenance information corresponding to the electrostatic precipitator apparatus 7 to the system management unit 71.

In the dust collecting apparatus operating state monitoring process described above, the dust collection control processing unit 7E monitors various abnormalities of the electrostatic precipitator apparatus 7 and the timing to perform maintenance work thereon, and transmits abnormality information and maintenance information to the system management unit 71 at the time of the occurrence of abnormality. Consequently, the system management unit 71 can display the abnormality information and maintenance information on a display unit 74 or issue an alarm and store a history of abnormalities in the system management unit 71.

Next, the seawater scrubber 9 and the like for treating exhaust gas emitted from the electrostatic precipitator apparatus 7 are described.

Exhaust gas without PM, emitted from the electrostatic precipitator apparatus 7, is supplied to an economizer 8 and subjected to heat exchange, and consequently the exhaust heat is recovered and supplied to the seawater scrubber 9.

In this seawater scrubber 9, the exhaust gas that is emitted from the economizer 8 is supplied to an intermediate portion of a cylindrical container 9A through a piping system 10. A plurality of spray nozzles 9B for spraying seawater onto the exhaust gas are placed at the upper side, and on the inside of, the cylindrical container 9A. The seawater sprayed by the spray nozzles 9B removes SOx from the exhaust gas.

The seawater containing SOx is accumulated in a lower portion of the cylindrical container 9A, and the accumulated seawater containing SOx is sent to a seawater component regulator 9C in order to be subjected to component regulation, and the resultant seawater is sent to the seawater scrubber 9 via a seawater circulator 9D in order to be cyclically used. The amount of seawater sprayed from the spray nozzles 9B of the seawater scrubber 9 is controlled by a scrubber controller 9E. Note that the seawater that is subjected to component regulation by the seawater component regulator 9C may not be cyclically used but may be drained into the outside sea by the seawater circulator 9D which receives a circulation stop command from a seawater component controller 9F.

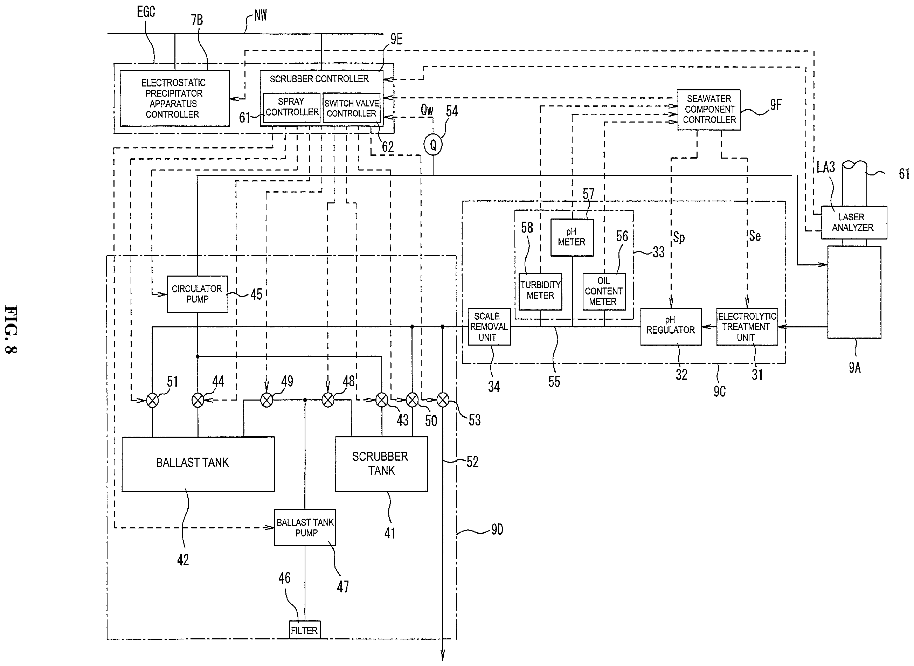

Specific configurations of the seawater component regulator 9C and the seawater circulator 9D are shown in Fig. 8. In other words, the seawater component regulator 9C has an electrolytic treatment unit 31 that receives recovered seawater containing SOx and recovered from the lower portion of the cylindrical container 9A of the seawater scrubber 9 and separates the oil content from the recovered seawater by means of electrolysis, a pH regulator 32 for regulating the pH of the recovered seawater from which the oil content is separated by the electrolytic treatment unit 31, a water quality measurement unit 33 for measuring the water quality of the pH-regulated recovered seawater that is emitted from the pH regulator 32, and a scale removal unit 34 for removing scales attached to the inside of the piping system.

The pH-regulated recovered seawater emitted from the pH regulator 32 is sent to the seawater circulator 9D. The seawater circulator 9D has a scrubber tank 41 in which the component-regulated recovered seawater emitted from the seawater component regulator 9C is accumulated, and a ballast tank 42 into which seawater is poured in order to regulate the seawater when the loading capacity of the vessel is low. The recovered seawater, the pH of which is regulated by the pH regulator 32, may not be cyclically used but may be drained into the outside sea by the seawater circulator 9D which receives a circulation stop command from the seawater component controller 9F.

The seawater circulator 9D also has a circulator pump 45 that transfers the seawater in the scrubber tank 41 and ballast tank 42 to the spray nozzles 9B of the seawater scrubber 9 via solenoid valves 43 and 44.

The seawater circulator 9D also has a ballast tank pump 47 for pumping up seawater of the sea into the ballast tank 42 through a filter 46. The seawater pumped up by the ballast tank pump 47 is supplied selectively to the scrubber tank 41 and the ballast tank 42 via solenoid valves 48 and 49.

The seawater circulator 9D also has solenoid valves 50 and 51 for supplying the recovered seawater emitted from the seawater component regulator 9C selectively to the scrubber tank 41 and the ballast tank 42.

Each of the solenoid valves 43, 44, 48, 49, 50 and 51 are opened/closed by the scrubber controller 9E. The scrubber controller 9E executes a scrubber control process described hereinafter, to control a SOx removal rate at which SOX is removed by the seawater scrubber 9 to a predetermined range.

A flow meter 54 is installed on a piping system extending from the seawater circulator 9D to the seawater scrubber 9.

The pH-regulated recovered seawater emitted from the pH regulator 32 of the seawater component regulator 9C is sent to the seawater circulator 9D. Note that, before a location in the seawater circulator 9D where the recovered seawater is cyclically supplied to the seawater scrubber 9 by the circulator pump 45, a drainage piping system 52 and a solenoid valve 53 configuring a route for draining the recovered seawater to the outside sea are provided. Therefore, whether to cyclically supply the recovered seawater to the seawater scrubber by means of the circulator pump 45 or whether to drain the recovered seawater into the outside sea can be selected based on a command from the seawater component controller 9F. According to such a configuration, the seawater component controller 9F can select and execute introducing the recovered seawater into the circulator pump 45 or draining the recovered seawater into the outside sea by opening/closing the solenoid valve 53.

The water quality measurement unit 33, on the other hand, has an oil content meter 56 that measures the oil content concentration of the recovered seawater, in which oil mist of the exhaust gas of the recovered seawater is mixed, a pH meter 57 for measuring a pH, and the turbidity meter 58 for measuring the turbid component concentration of soot/dust and the like of the recovered seawater, the oil content meter 56, the pH meter 57 and the turbidity meter 58 being connected to the piping system 55 of the seawater component regulator 9C. Values measured by the oil content meter 56, pH meter 57, and turbidity meter 58 are transmitted to the seawater component controller 9F via any transmission system. The value measured by the turbidity meter 58 is transmitted to the electrostatic precipitator apparatus controller 7B as well via any transmission system.

The seawater component controller 9F outputs a current command value Se for controlling an electrolytic treatment current of the electrolytic treatment unit 31 in such a manner that the oil content concentration in the recovered seawater falls within a set range, based on the oil content concentration of the seawater within the piping system 55 that is measured by the oil content meter 56. In other words, the seawater component controller 9F determines whether the oil content concentration of the seawater falls within the set range or not. When the oil content concentration falls within the set range, the seawater component controller 9F outputs the current command value Se for controlling a preset reference electrolytic treatment current beforehand. When the oil content concentration is outside the set range, the seawater component controller 9F increases the reference electrolytic treatment current in such a manner that the oil content concentration falls within the set range, and outputs the current command value Se to improve the electrolytic treatment performance.

The seawater component controller 9F also determines whether the pH measurement value of the seawater within the piping system 55 that is measured by the pH meter 57 falls within the set range or not. When the pH measurement value falls within the set range, the seawater component controller 9F stops introducing a pH regulating agent. When the pH exceeds the set range, the seawater component controller 9F outputs a pH regulating agent introducing command value Sp for controlling the input amount of pH regulating agent of the pH regulator 32 in response to pH measurement. Note that a pH regulating process executed by the pH regulator 32 regulates the input amount of a strong basic neutralizer prepared by use of sodium hydroxide, potassium hydroxide, electrolysis, electrolysis or the like, based on the pH regulating agent introducing command value Sp.

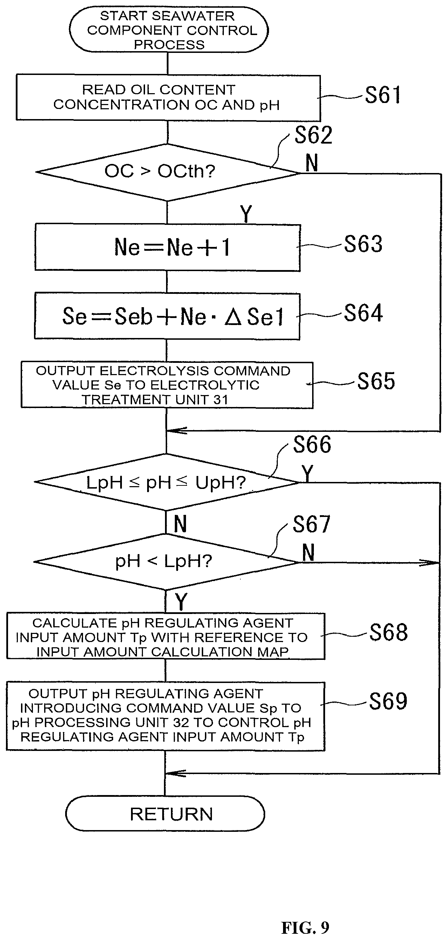

The seawater component controller 9F executes a seawater component control process shown in Fig. 9. This seawater component control process first reads, in step S61, the oil content concentration OC measured by the oil content meter 56 and the pH measured by the pH meter 57, and then proceeds to step S62.

In this step S62, the seawater component controller 9F determines whether the oil content concentration OC exceeds a preset upper limit threshold OCth. When the determination result is $OC \leq OCth$, the seawater component controller 9F determines that the oil content concentration of the recovered seawater recovered from the seawater scrubber 9 is normal, and proceeds to step S66 that is described hereinafter. When the determination result is $OC > OCth$, the seawater component controller 9F determines that the oil content concentration is high, proceeds to step S63 to increment a correction coefficient Ne by "1," and moves on to step S64. In step S64, the seawater component controller 9F calculates the electrolysis current command value Se by adding a reference value Seb of the electrolysis current command value Se for the electrolytic treatment unit 31 to a value obtained by multiplying the correction coefficient Ne by a predetermined value $\Delta Se$ ($Se = Seb + Ne \cdot \Delta Se$).

Next, in step S65, the seawater component controller 9F outputs the electrolysis current command value Se to the electrolytic treatment unit 31 and proceeds to step S66.

In step S66, the seawater component controller 9F determines whether the pH measured by the pH meter 57 falls within an allowable range between a lower limit threshold LpH representing the acidity side with respect to a preset neutral point and an upper limit value UpH representing the alkalinity side with respect to the neutral point. When the determination result is $LpH \leq pH \leq UpH$, the seawater component controller 9F determines that the pH of the recovered seawater recovered from the seawater scrubber 9 is normal, and then returns to step S61.

However, when it is determined in step S66 that the pH is outside the allowable range, the seawater component controller 9F proceeds to step S67 to determine whether the pH is less than the lower limit threshold LpH. When the determination result is $pH < LpH$, the seawater component controller 9F proceeds to step S68 to calculate an input amount Tp of the pH regulating agent with reference to an input amount calculation map representing the relationship between pH and an input amount of the pH regulating agent based on the current pH, and then proceeds to step S69. In step S69, the seawater component controller 9F outputs, to the pH regulator 32, the pH regulating agent introducing command value Sp for controlling the input amount to the calculated input amount Tp of the pH regulating agent, and then returns to step S61.

When it is determined in step S67 that the pH is greater than the upper limit value UpH, the seawater component controller 9F returns directly to step S61.

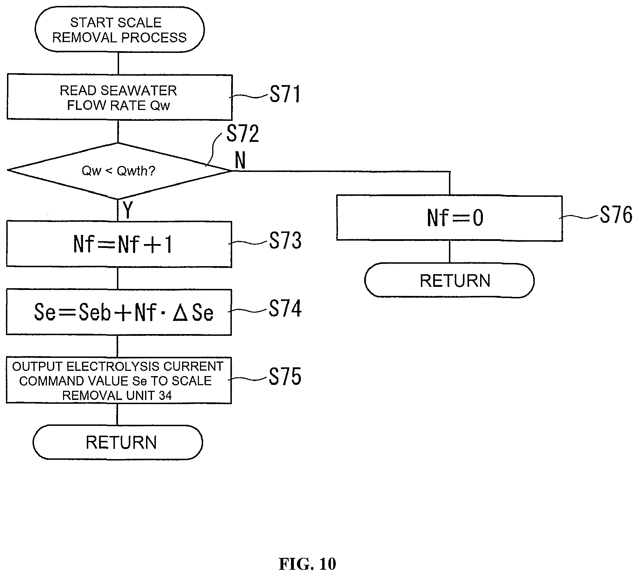

The seawater component controller 9F executes a scale removal process shown in Fig. 10 in order to prevent clogging of a piping system by scales. The recovered seawater passing through the piping system contains scales such as sea organisms, microbes, calcium and magnesium. Therefore, gradual adhesion of these scales to the inside of the piping system causes clogging thereof. In order to overcome this problem, the seawater component controller 9F causes the scale removal unit 34 of the seawater component regulator 9C to execute the scale removal process for removing such scales.

This scale removal process is a timer interrupt process executed every predetermined period of time. In the scale removal process, as shown in Fig. 10, the seawater component controller 9F first reads, in step S71, a flow rate Qw of the seawater that is measured by the flow meter 54 and emitted from the circulator pump 45, and then proceeds to step S72.

In step S72, the seawater component controller 9F determines whether the seawater flow rate Qw is below a preset lower limit threshold Qwth. When the determination result is $Qw \geq Qwth$, the seawater component controller 9F determines that the amount of scales in the piping system 55 is normal, proceeds to step S76 to clear a correction coefficient Nf, described hereinafter, to "0," and returns to step S71. When the seawater flow rate Qw is less than the lower limit threshold Qwth, the seawater component controller 9F determines that a large amount of scales is attached to the inside of the piping system 55, proceeds to step S73 to increment the correction coefficient Nf by "1," and then proceeds to step S74.

In step S74, the seawater component controller 9F calculates the electrolysis current command value Se by adding the reference value Seb of the electrolysis current command value Se for the electrolytic treatment unit 31 to a value obtained by multiplying the correction coefficient Nf by the predetermined value $\Delta Se$ ($Se = Seb + Nf \cdot \Delta Se$).

Next, in step S76 the seawater component controller 9F outputs the electrolysis current command value Se to the scale removal unit 34 provided at a random position in the piping system 55, and then returns to step S71.

In this manner, the scale removal unit 34 can remove the scales stuck inside the piping system, by means of electrolysis.

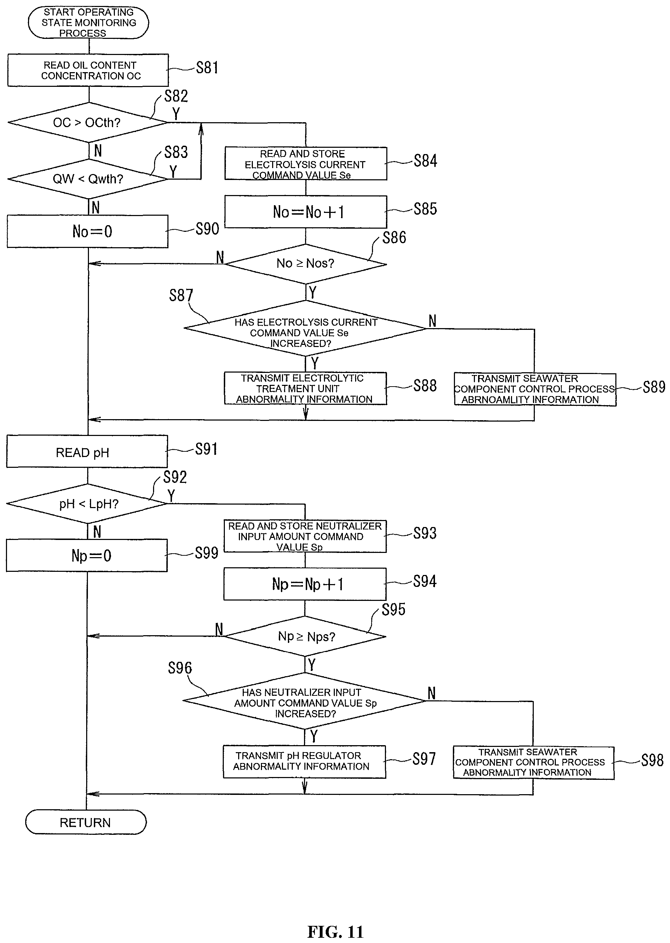

The seawater component controller 9F executes an operating state monitoring process for monitoring the operating state of the seawater component regulator 9C. This operating state monitoring process is a timer interrupt process executed every predetermined period of time. In the operating state monitoring process, as shown in Fig. 11, the seawater component controller 9F first reads, in step S81, the oil content concentration OC measured by the oil content meter 56 and the seawater flow rate Qw measured by the flow meter 54, and then proceeds to step S82 to determine whether the oil content concentration exceeds the preset upper limit threshold OCth.

When the determination result is $OC \leq OCth$, the seawater component controller 9F proceeds to step S83 to determine whether the seawater flow rate Qw is below the preset lower limit threshold Qwth.

When the determination result of $Qw \geq Qwth$, the seawater component controller 9F determines that the electrolytic treatment unit 31 is normal, and proceeds to step S90. In step S90, the seawater component controller 9F clears a variable No to "0" and then proceeds to step S91.

However, when it is determined in step S82 that the oil content concentration OC is greater than the upper limit threshold OCth, the seawater component controller 9F proceeds to step S84. When it is determined in step S83 that the seawater flow rate Qw is less than the lower limit threshold Qwth, the seawater component controller 9F proceeds to step S84.

In step S84, the seawater component controller 9F reads the electrolysis current command value Se for the electrolytic treatment unit 31, stores the read electrolysis current command value Se in a storage unit such as a RAM, and then proceeds to step S85.

In step S85, the seawater component controller 9F increments the time measuring variable No by "1," and then moves on to step S86. In step S86, the seawater component controller 9F determines whether the variable No is equal to or greater than a predetermined number of times Nos that is set beforehand. When the determination result is No < Nos, the seawater component controller 9F proceeds directly to step S91 that is described hereinafter. When the determination result is $No \geq Nos$, the seawater component controller 9F proceeds to step S87. In step S87, the seawater component controller 9F reads the electrolysis current command value Se of the predetermined number of times Nos that is stored in the storage unit, to determine whether the electrolysis current command value Se has increased or not. In a case where the electrolysis current command value Se has increased, the seawater component controller 9F determines that the electrolytic treatment unit 31 is abnormal, and then proceeds to step S88.

In step S88, the seawater component controller 9F transmits electrolytic treatment unit abnormality information to the system management unit 71, and then proceeds to step S91.

When it is determined in step S87 that the electrolysis current command value Se has not increased, the seawater component controller 9F determines that the seawater component control process has an abnormality, and then proceeds to step S89. In step S89, the seawater component controller 9F transmits seawater component control process abnormality information to the system management unit 71, and then proceeds to step S91.

In step S91, the seawater component controller 9F reads the pH measured by the pH meter 57, and then proceeds to step S92. In step S92, the seawater component controller 9F determines whether the pH is lower than the lower limit threshold LpH that is smaller than a preset neutral point. When the determination result is pH < LpH, the seawater component controller 9F determines that the pH of the recovered seawater recovered from the seawater scrubber 9 is more of an acidic quality, proceeds to step S93 to read the pH regulating agent introducing command value Sp for the pH regulator 32, stores the read pH regulating agent introducing command value Sp in the storage unit such as a RAM, and then proceeds to step S94.

In step S94, the seawater component controller 9F increments a variable Np by "1," and then proceeds to step S95. In step S95, the seawater component controller 9F determines whether the variable Np is equal to or greater than a predetermined number of times Nps. When the variable Np is less than the predetermined number of times Nps, the timer interrupt process is ended, returning to a predetermined main program.

When it is determined in step S95 that the variable Np is equal to or greater than the predetermined number of times Nps, the seawater component controller 9F proceeds to step S96. In step S96, the seawater component controller 9F reads the pH regulating agent introducing command value Sp of the predetermined number of times Nps that is stored in the storage unit, to determine whether the pH regulating agent introducing command value Sp has increased or not. In a case where the pH regulating agent introducing command value Sp has increased, the seawater component controller 9F determines that the pH regulator has an abnormality, and proceeds to step S97. In step S97, the seawater component controller 9F transmits pH regulator abnormality information to the system management unit 71, and ends the timer interrupt process, returning to the predetermined main program.

When it is determined in step S96 that the pH regulating agent introducing command value Sp has not increased, the seawater component controller 9F determines that an abnormality has occurred in the seawater component control process, and then proceeds to step S98. In step S98, the seawater component controller 9F transmits seawater component control process abnormality information to the system management unit 71, and ends the timer interrupt process, returning to the predetermined main program.

When it is determined in step S61 that the pH is equal to or greater than the lower limit threshold LpH, the seawater component controller 9F determines that the pH regulator 32 is normal, and then proceeds to step S68. In step S68, the seawater component controller 9F clears the variable Np to "0" and ends the timer interrupt process, returning to the predetermined main program.

By causing the seawater treatment controller 9F to execute the operating state monitoring process in this manner, abnormalities can be detected in the electrolytic treatment unit 31, the pH regulator 32, and the seawater component control process. When these abnormalities are detected, the seawater treatment controller 9F transmits abnormality information to the system management unit 71 described hereinafter, allowing the system management unit 71 to process the abnormality information.

Furthermore, the seawater that is pumped up by the ballast tank pump 47 and used by the seawater scrubber 9 is used by the seawater scrubber 9 and thereafter recovered by the seawater component controller 9F so as to be cyclically used inside the vessel. However, any of the oil content concentration OC, the pH, and the turbidity T of the circulated seawater exceeds the drainage regulation value that is defined beforehand based on environmental regulations, the circulated seawater can no longer be drained into the outside sea.

In order to avoid such circumstances, the seawater component controller 9F executes a circulated water monitoring process. Before any of the values of the oil content concentration OC, the pH, and the turbidity T of the circulated seawater exceeds the preset prescribed range, the seawater component controller 9F prevents a situation where each of the values corresponding to the circulated seawater from exceeding the prescribed range, by executing a circulated seawater monitoring process in which some of the circulated seawater is drained into the outside sea and a new amount of seawater required is pumped up.

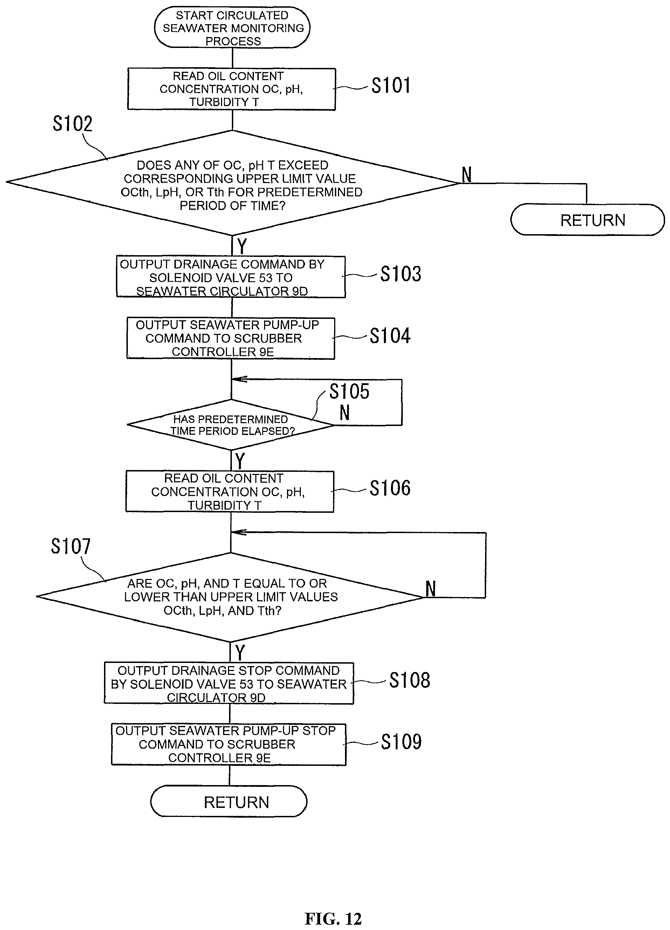

In the circulated seawater monitoring process executed by the seawater component controller 9F, first, the seawater component controller 9F reads the oil content concentration OC measured by the oil content meter 56, the pH measured by the pH meter 57, and the turbidity T detected by the turbidity meter 58 in step S101, and then proceeds to step S102, as shown in Fig. 12.

In step S102, the seawater component controller 9F determines whether a situation in which any of the oil content concentration OC, the pH and the turbidity T exceeds the corresponding preset upper limit threshold (OCth, LpH, LpH) lasts for a predetermined period of time.

When any of the situations OC > OCth, pH < LpH, and T > UT lasts for the predetermined period of time, the seawater component controller 9F determines that there is a possibility that the circulated seawater can no longer be drained into the sea, and then proceeds to step S103. Note that, in a case where none of the situations OC > OCth, pH < LpH and T > UT lasts for the predetermined period of time, the seawater component controller 9F returns to the predetermined main program directly.

The upper limit threshold OCth, the upper limit threshold LpH, and the upper limit threshold UT are values that do not exceed the drainage regulation value that makes it impossible for the circulated seawater to be drained into the sea, and are set at somewhat high values less than the drainage regulation value (e.g., 90% and the like of the drainage regulation value).

In step S103, the seawater component controller 9F transmits, to the solenoid valve 53 of the seawater circulator 9D, a drainage command to drain the circulated seawater to the outside through the drainage piping system 52, and then proceeds to step S104.

In step S104, the seawater component controller 9F transmits, to the scrubber controller 9E, a pump-up command to use the ballast tank pump 47 to pump up seawater from the sea through the filter 46, and then proceeds to step S105.

In step S105, the seawater component controller 9F determines whether a predetermined period of time elapses since the beginning of the drainage process of step S103 and the seawater pump-up process of step S104. When it is determined that the predetermined period of time has not elapsed, the seawater component controller 9F waits until the predetermined period of time elapses. When it is determined in step S105 that the predetermined period of time has elapsed, the seawater component controller 9F proceeds to step S106.

In step S106, the seawater component controller 9F detects the oil content concentration OC, pH or turbidity T of the circulated seawater, and then proceeds to step S107. In step S107, the seawater component controller 9F determines whether the oil content concentration OC, the pH, and the turbidity T fall below the upper limit thresholds thereof (OCth, LpH, and UT) as a result of the drainage process of step S103 and the seawater pump-up process of step S104. When it is determined that the oil content concentration OC, the pH, and the turbidity T are not below the upper limit thresholds thereof (OCth, LpH, and UT), the seawater component controller 9F waits until these values fall below the upper thresholds. When the oil content concentration OC, the pH, and the turbidity T fall below the upper thresholds thereof (OCth, LpH, and UT), the seawater component controller 9F proceeds to step S108.

In step S108, the seawater component controller 9F transmits, to the solenoid valve 53 of the seawater circulator 9D, a drainage stop command to stop the drainage process, and then proceeds to step S109. In step S109, the seawater component controller 9F transmits, to the scrubber controller 9E, a pump-up stop command to stop the pump-up process by the ballast tank pump 47, returning to the predetermined main program.

The exhaust gas emitted from the upper portion of the cylindrical container 9A of the seawater scrubber 9 is released from a funnel 83 to the atmosphere through a piping system 81 where the third laser analyzer LA3 is installed as an exhaust gas component detector for detecting the components contained in the exhaust gas, and through a silencer 82. The third laser analyzer LA3 detects a PM concentration, a $SO_2$ concentration and a $CO_2$ concentration of the exhaust gas. For the purpose of monitoring the operating state of the NOx removal device, a laser analyzer capable of detecting a NOx concentration and an ammonia concentration may be installed. In addition, laser analyzers can be installed at the inlet-side piping system and the outlet-side piping system of the NOx removal device 5.

The configurations of the first to third laser analyzers LA1 to LA3 are described next.

The first laser analyzer LA1 has the configuration shown in Fig. 13. In other words, the first laser analyzer LA1 is a frequency modulation-type laser analyzer, and is also a PM concentration detection analyzer that has a light source unit 104 with a laser element that emits a visible region laser beam for detecting the PM concentration. The first laser analyzer LA1 is welded to walls 201, 202 of a piping system through which the exhaust gas passes and thereby fixated by flanges 101a, 101b. The flange 101a is provided with a transparent emitting window 101c. Also, a bottomed cylindrical cover 103a is mounted to the flange 101a with a mounting seat 102a therebetween.

The light source unit 104 is placed on the inside of the cover 103a. The light source unit 104 has a laser element that emits a visible light region laser beam for detecting the PM. The laser beam that is output from the light source unit 104 is collimated into parallel light by a light source-side optical system having a collimate lens 105. The parallel light passes through the center of the flange 101a and enters walls 201a, 202 (inside the flue) through the emitting window 101c. This parallel light is absorbed and scattered when penetrating exhaust gas to be measured which is present inside the walls 201, 202.

A bottomed cylindrical cover 103b is mounted to the flange 101b with a mounting seat 102b therebetween. Also, the flange 101b is provided with a transparent incident window 101d. The parallel light penetrating the flue passes through the incident window 101d, is then condensed by a condenser lens 106 functioning as a light-receiving-side optical system inside the cover 103b, and then received by a light receiver 107. The light receiver 107 converts the condensed light into an electrical signal, which is then input to a signal processing circuit 108 located next to the light receiver 107. The signal processing circuit 108 is connected to a central processing unit 109 functioning as an arithmetic processing unit.

The second laser analyzer LA2 has the configuration shown in Fig. 14. In other words, the second laser analyzer LA2 is a frequency modulation-type laser analyzer and has a PM concentration detection analyzer 111 and a $SO_2$ concentration analyzer 112. The PM concentration detection analyzer 111 has a light source unit 111a with a laser element that emits a visible region laser beam for detecting a PM concentration. The $SO_2$ concentration

detection analyzer 112 has a light source unit 112a with a laser element that emits a mid-infrared region laser beam for detecting a $SO_2$ concentration. The configurations of the PM concentration detection analyzer 111 and the $SO_2$ concentration detection analyzer 112 are the same as the configuration of the first laser analyzer LA1.

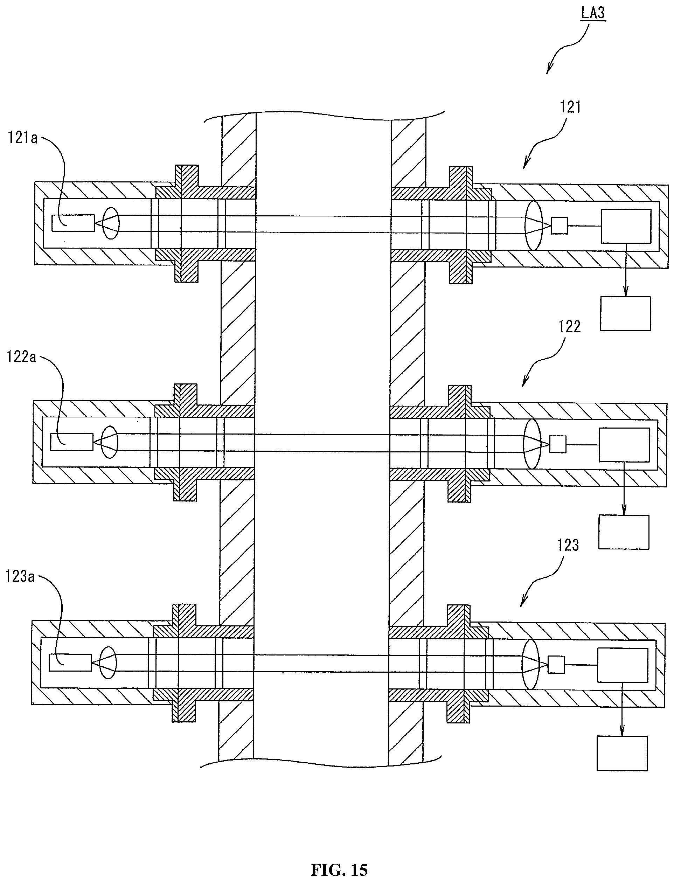

The third laser analyzer LA3 has the configuration shown in Fig. 15. Specifically, the third laser analyzer LA3 is a frequency modulation-type laser analyzer and has a PM concentration detection analyzer 121, a $SO_2$ concentration detection analyzer 122, and a $CO_2$ concentration detection analyzer 123. The PM concentration detection analyzer 121 has a light source unit 121a with a laser element that emits a visible region laser beam for detecting a PM. The $SO_2$ concentration detection analyzer 122 has a light source unit 122a with a laser element that emits a mid-infrared region laser beam for detecting a $SO_2$ concentration. The $CO_2$ concentration detection analyzer 123 has a light source unit 123a with a laser element that emits a near-infrared region laser beam for detecting a $CO_2$ concentration. The configurations of the PM concentration detection analyzer 121, the $SO_2$ concentration detection analyzer 122, and the $CO_2$ concentration detection analyzer 123 are the same as the configuration of the first laser analyzer LA1.

The scrubber controller 9E of an exhaust gas treatment controller EGC is described next.

A piping system flow rate value Qw that is detected by the flow meter 54 for detecting a flow rate of seawater discharged from the circulator pump 45, a $SO_2$ concentration detection value Cs1 that is detected by the second laser analyzer LA2 placed at the outlet side of the electrostatic precipitator apparatus 7, a $SO_2$ concentration detection value Cs2 that is detected by the third laser analyzer LA3 placed at the outlet side of the seawater scrubber 9, and a $CO_2$ concentration detection value Cs3 detected by the third laser analyzer LA3, are input to the scrubber controller 9E.

The scrubber controller 9E determines whether an arithmetic result of the $SO_2$ concentration detection value Cs2 and the $CO_2$ concentration detection value Cs3 (= $SO_2/CO_2$) falls within a prescribed range that is set beforehand. When the arithmetic result of $SO_2/CO_2$ exceeds the prescribed range, the scrubber controller 9E increases the rotating speed of the circulator pump 45 in such a manner that the piping system flow rate value Qw increases. However, when the arithmetic result of $SO_2/CO_2$ is less than the prescribed range, the scrubber controller 9E lowers the rotating speed of the circulator pump 45 in such a manner that the piping system flow rate value Qw drops. The scrubber controller 9E outputs, to the circulator pump 45, a command to increase or reduce the rotating speed of the circulator pump 45 to the circulator pump 45 as a seawater scrubber spray command value.

The scrubber controller 9E is now described in detail. The scrubber controller 9E has a spray controller 61 for controlling the amount of seawater sprayed from the spray nozzles 9B, and a switch valve controller 62 for opening/closing the solenoid valves 43, 44, 48, 49, 50, 51, and 53, as shown in Fig. 8.

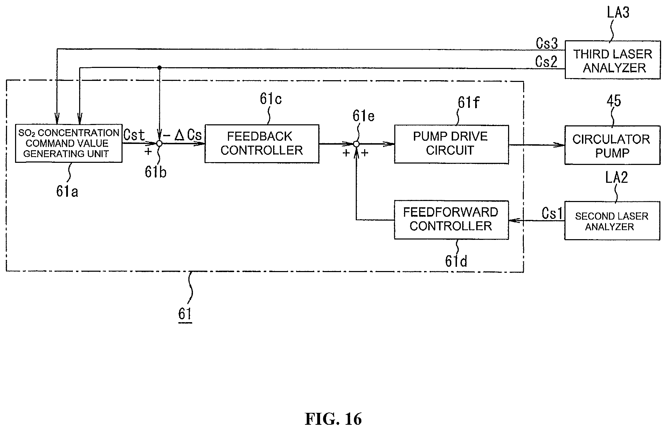

As shown in Fig. 16, the spray controller 61 has a $SO_2$ concentration command value generating unit 61a, a subtractor 61b, a feedback controller 61c, a feedforward controller 61d, an adder 61e, and a pump drive circuit 61f. The $SO_2$ concentration command value generating unit 61a receives input of the $SO_2$ concentration Cs2 and $CO_2$ concentration Cs3 detected by the third laser analyzer LA3, executes an arithmetic operation of $SO_2/CO_2$, and generates a $SO_2$ concentration target value. The feedback controller 61c receives input of a concentration deviation ΔCs that is obtained by subtracting the generated $SO_2$ concentration target value Cst and the $SO_2$ concentration Cs2 detected by the third laser analyzer LA3 by means of the subtractor 61b, and executes, for example, PID (proportional-integral-differential) feedback control. The feedforward controller 61d receives input of the $SO_2$ concentration Cs1 detected by the second laser analyzer LA2 and executes feedforward control. The adder 61e adds a feedforward command value output from the feedforward controller 61d to a feedback command value output from the feedback controller 61c. Note that the $SO_2$ concentration command value generating unit 61a can set any $SO_2$ concentration target value regardless of the result of the arithmetic operation of $SO_2/CO_2$.

The added output from the adder 61e is supplied in the form of a seawater scrubber spray command value Jt to the pump drive circuit 61f that is driven to rotate the circulator pump 45.

The following operations become possible by forming the spray controller 61 into the configuration shown in Fig. 16.

First, the second laser analyzer LA2 placed at the outlet side of the electrostatic precipitator apparatus 7 (i.e., the inlet side of the seawater scrubber 9) can detect the $SO_2$ concentration Cs1 of the exhaust gas from which the PM is removed by the electrostatic precipitator apparatus 7. The third laser analyzer LA3 placed at the outlet side of the seawater scrubber 9 can detect the $SO_2$ concentration Cs2 and $CO_2$ concentration Cs3 of the exhaust gas from which the SOx is removed by the seawater scrubber 9.

The detected $SO_2$ concentration Cs2 and $CO_2$ concentration Cs3 are input to the $SO_2$ concentration command value generating unit 61a. The $SO_2$ concentration command value generating unit 61a calculates $SO_2/CO_2$ from the $SO_2$ concentration Cs2 and the $CO_2$ concentration Cs3 and, based on this calculation result, generates and outputs the $SO_2$ concentration target value Cst. Note that the $SO_2$ concentration command value generating unit 61a can also set any value as the $SO_2$ concentration target value Cst.

Furthermore, the spray controller 61 calculates the concentration deviation ΔCs by causing the subtractor 61b to subtract the $SO_2$ concentration Cs2 detected

by the third laser analyzer LA3 from the $SO_2$ concentration target value Cst, and supplies this concentration deviation $\Delta Cs$ to the feedback controller 61c. The feedback controller 61c executes, for example, the PID control process and thereby calculates a feedback command value that matches the $SO_2$ concentration Cs2 detected by the third laser analyzer LA3 and the $SO_2$ concentration target value.

On the other hand, the $SO_2$ concentration Cs1 at the inlet side of the seawater scrubber 9, detected by the second laser analyzer LA2, which is supplied to the feedforward controller 61d. This allows the feedforward controller 61d to calculate a feedforward command value corresponding to a change in the $SO_2$ concentration that occurs at the inlet side of the seawater scrubber 9. The spray controller 61 causes the adder 61e to add a feedback command value to this feedforward command value to calculate the seawater scrubber spray command value Jt, and supplies this seawater scrubber spray command value Jt to the pump drive circuit 61f. The pump drive circuit 61f is driven to rotate the circulator pump 45 based on this seawater scrubber spray command value Jt.

In this manner, the spray controller 61 can control the $SO_2$ concentration of the exhaust gas emitted from the seawater scrubber 9 to an optimum concentration while coping with a drastic change in the $SO_2$ concentration Cs1 that occurs at the input side of the seawater scrubber 9.

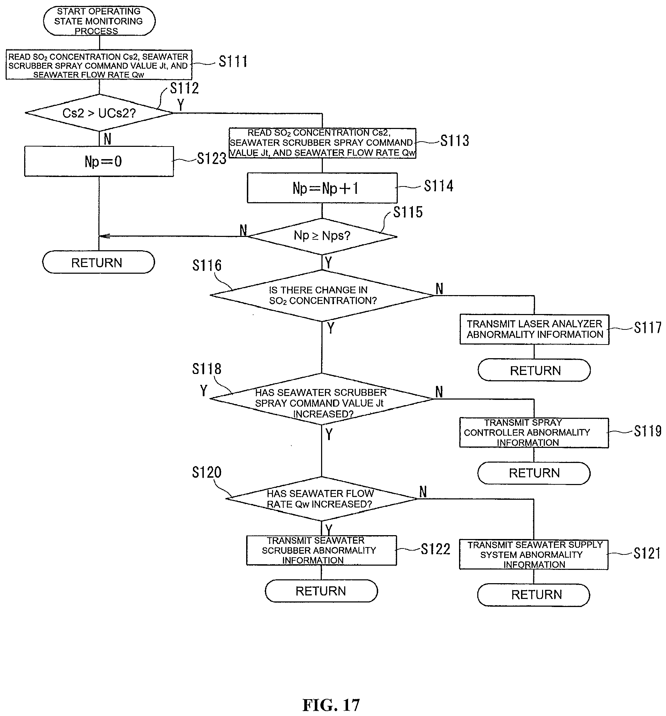

In addition, the scrubber controller 9E executes an operating state monitoring process shown in Fig. 17.

This operating state monitoring process is a timer interrupt process executed every predetermined period of time. First, in step Sill the scrubber controller 9E reads the $SO_2$ concentration Cs2 detected by the third laser analyzer LA3, the seawater scrubber spray command value Jt, and the seawater flow rate Qw detected by the flow meter 54. In the next step S112, the scrubber controller 9E determines whether the $SO_2$ concentration Cs2 exceeds a preset upper limit $SO_2$ concentration UCs2. When it is determined that the $SO_2$ concentration Cs2 is greater than the upper limit $SO_2$ concentration UCs2, the scrubber controller 9E proceeds to step S113. In step S113, the scrubber controller 9E stores the $SO_2$ concentration Cs2, the seawater scrubber spray command value Jt, and the seawater flow rate Qw in the storage unit such as a RAM, and then proceeds to step S114.

In step S114, the scrubber controller 9E increments a variable Np by "1," the variable Np being used for measuring a duration during which Cs2 > UCs2 lasts, and then proceeds to step S115. In step S115, the scrubber controller 9E determines whether the variable Np is equal to or greater than the predetermined number of times Nps that is set beforehand. When it is determined that the variable Np is less than the predetermined number of times Nps, the scrubber controller 9E ends the timer interrupt process, returning to the predetermined main program.

When it is determined in step S114 that the variable Np is equal to or greater than the predetermined number of times Nps, the scrubber controller 9E proceeds to step S116. In step S116, the scrubber controller 9E reads the $SO_2$ concentrations Cs2 corresponding to the predetermined number of times Nps that are stored in the storage unit, and determines whether there is a change in the $SO_2$ concentration Cs2. When it is determined that there are no changes in the $SO_2$ concentration Cs2, the scrubber controller 9E determines that an abnormality has occurred in the second laser analyzer LA2 or the third laser analyzer LA3, and then proceeds to step S117. In step S117, the scrubber controller 9E transmits laser analyzer abnormality information to the system management unit 71, and ends the timer interrupt process.

When it is determined in step S116 that there is a change in the $SO_2$ concentration Cs2, the scrubber controller 9E determines that the second laser analyzer LA2 or the third laser analyzer LA3 is normal, and then proceeds to step S118. In step S118, the scrubber controller 9E determines whether the seawater scrubber spray command value Jt increase or not. When it is determined that the seawater scrubber spray command value Jt has not increased, the scrubber controller 9E determines that an abnormality has occurred in the spray controller 61, and then proceeds to step S119. In step S119, the scrubber controller 9E transmits spray controller abnormality information to the system management unit 71, and ends the timer interrupt process, returning to the predetermined main program.

When it is determined in step S118 that the seawater scrubber spray command value Jt has increased, the scrubber controller 9E proceeds to step S120. In step S120, the scrubber controller 9E reads the seawater flow rates Qw corresponding to the predetermined number of times Np that are stored in the storage unit, and determines whether the seawater flow rate Qw has increased or not. When it is determined that the seawater flow rate Qw has not increased, the scrubber controller 9E determines that an abnormality has occurred in a seawater supply system including the circulator pump 45, and then proceeds to step S121. In step S121, the scrubber controller 9E transmits seawater supply system abnormality information to the system management unit 71, and ends the timer interrupt process, returning to the predetermined main program.

When it is determined in step S120 that the seawater flow rate Qw has increased, the scrubber controller 9E determines that the seawater supply system including the circulator pump 45 is normal and that an abnormality has occurred in the seawater scrubber 9, and proceeds to step S122. In step S122, the scrubber controller 9E transmits seawater scrubber abnormality information to the system management unit 71, and ends the timer interrupt process, returning to the predetermined main program.

When it is determined in step S112 that the $SO_2$ concentration Cs2 is equal to or less than the upper limit

$SO_2$ concentration Ucs2, the scrubber controller 9E proceeds to step S123. In step S123, the scrubber controller 9E clears the variable Np to "0" and ends the timer interrupt process, returning to the predetermined main program.

By causing the scrubber controller 9E to execute the operating state monitoring process in this manner, the occurrence of abnormality in the seawater scrubber 9, the occurrence of abnormality in the seawater supply system including the circulator pump 45, the occurrence of abnormality in the second laser analyzer LA2 or laser analyzer LA3, and the occurrence of abnormality in the spray controller 61 can be detected accurately. In addition, by causing the scrubber controller 9E to transmit the abnormality information of each part to the system management unit 71, the abnormality information can be accumulated in the system management unit 71.

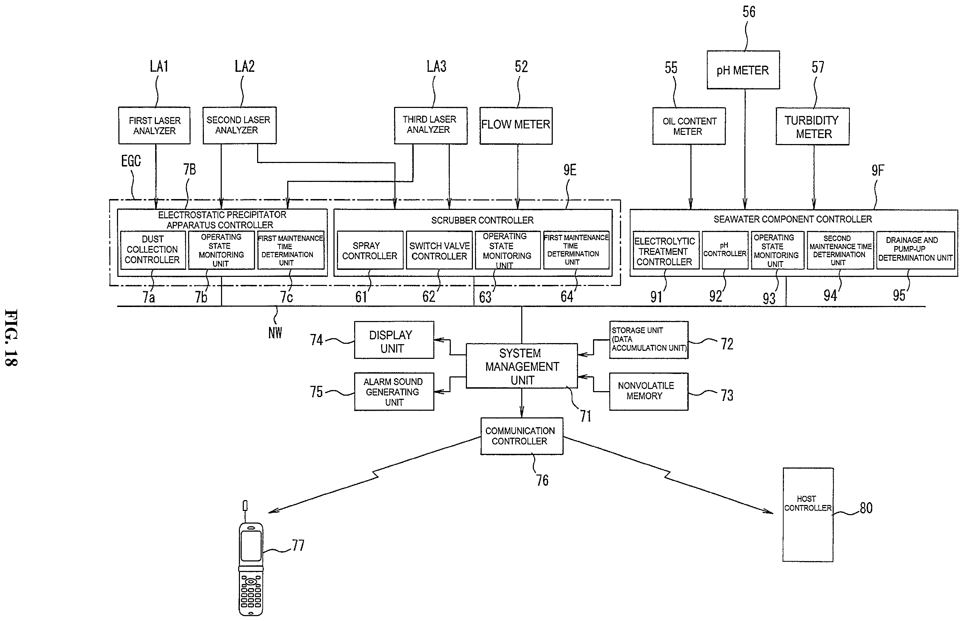

A schematic configuration of the control system for the exhaust gas treatment system described above is summarized in Fig. 18.

Specifically, the exhaust gas treatment controller EGC is configured by the electrostatic precipitator apparatus controller 7B and the scrubber controller 9E. The exhaust gas treatment controller EGC and the seawater component controller 9F are connected to the system management unit 71 by the predetermined network NW.

The electrostatic precipitator apparatus controller 7B has a dust collection controller 7a having the dust collection control processing unit 7E for executing the dust collection feedforward control process shown in Fig. 5 and the dust collection feedback control process shown in Fig. 6, an operating state monitoring unit 7b that executes the operating state monitoring process shown in Fig. 8, and a first maintenance time determination unit 7c that determines a time for a maintenance work of the electrostatic precipitator apparatus 7 based on the frequency of occurrence of abnormality information and a cumulative operating time of the dust collection controller, and then transmits the determined maintenance time to the system management unit 71.

Similarly, the scrubber controller 9E has the spray controller 61 that executes the seawater spray control process, the switch valve controller 62 that drives a switch valve, an operating state monitoring unit 63 that executes the operating state monitoring process shown in Fig. 17, and a first maintenance time determination unit 64 that determines a time for a maintenance work of the seawater scrubber 9 based on the frequency of occurrence of abnormality information and a cumulative operating time of the seawater scrubber 9, and then transmits information on the determined maintenance time to the system management unit 71.

The seawater component controller 9F has an electrolysis controller 91 that controls the electrolytic treatment unit 31, a pH controller 92 that controls the pH regulator 32, an operating state monitoring unit 93 that executes the operating state monitoring process shown in Fig. 11 to monitor the operating states of the electrolytic treatment unit 31 and the operating state of the pH regulator 32, a second maintenance time determination unit 94 that determines times for maintenance works of the electrolytic treatment unit 31 and the pH regulator 32 configuring the seawater component regulator 9C based on the frequency of occurrence of abnormality information and a cumulative operating time of the seawater component regulator 9C, and then transmits information on the determined maintenance times to the system management unit 71, and a drainage and pump-up determination unit 95 that executes the circulated seawater monitoring process shown in Fig. 12 to determine to drain the circulated seawater and newly pump up seawater.

The operation data such as the PM collection rate DCE and corrected current IHa, abnormality information, and maintenance information that indicate the operating state of the electrostatic precipitator apparatus are transmitted from the electrostatic precipitator apparatus controller 7B to the system management unit 71. In addition, the operation data such as the seawater scrubber spray command value, abnormality information, and maintenance information that indicate the operating state of the seawater scrubber 9 are transmitted from the scrubber controller 9E to the system management unit 71. Moreover, the operation data such as the electrolysis current command value Se and pH regulating agent introducing command value Sp and abnormality information that indicate the operating state of the seawater component processing unit 9C are transmitted from the seawater component controller 9F to the system management unit 71.

The pH, turbidity, and oil content concentration detected by the water quality measurement unit 33 are transmitted from the seawater component controller 9F to the system management unit 71. In addition, the PM concentrations C1 to C3, the $SO_2$ concentrations Cs1 and Cs2 and the $CO_2$ concentration Cs3 are transmitted to the system management unit 71 from the first to third laser analyzers LA1 to LA3 functioning as the exhaust gas component detectors.

In addition, the storage unit 72 functioning as a data accumulation unit, a nonvolatile memory 73, the display unit 74 such as a liquid crystal display, an alarm sound generating unit 75 issuing an alarm, and a communication controller 76 are connected to the system management unit 71. The communication controller (alarm information transmission unit) 76 is connected to the Internet using, for example, satellite communication and thereby connected to a host controller 80 of a management company running the vessel, to transmit alarm information to a portable information terminal 77.

Upon reception of the operation data indicating the operating states of the electrostatic precipitator apparatus 7, the seawater scrubber 9, and the seawater component regulator 9C from the electrostatic precipitator apparatus controller 7B, the scrubber controller 9E, and the seawater component controller 9F respectively, the system management unit 71 divides these operation data items and performs data accumulation thereof by storing them in the storage unit 72 functioning as a data accumulation unit.

Furthermore, upon reception of various abnormality information from the electrostatic precipitator apparatus controller 7B, the scrubber controller 9E, and the seawater component controller 9F, the system management unit 71 stores, in the nonvolatile memory 73, the received abnormality information along with the operation data associated therewith that are obtained prior to and after the abnormality information are received, and the times at which the abnormality information are received.

As described above, the operation data, abnormality information, and maintenance information that indicate the operating state of the marine diesel engine exhaust gas treatment system are accumulated in the system management unit 71. As a result, the operating states of the electrostatic precipitator apparatus 7 and the seawater scrubber 9 configuring the marine diesel engine exhaust gas treatment system can accurately be understood.

Moreover, abnormalities of the electrostatic precipitator apparatus main body 7A, the electrostatic precipitator apparatus controller 7B and the exhaust gas component detectors (the first to third laser analyzers LA1 to LA3) can be detected. In addition, since the PM concentrations C1 to C3 and the turbidity are stored in the storage unit 72, changes in the PM concentrations and the turbidity can easily be confirmed. When an abnormality occurs in the electrostatic precipitator apparatus 7, the information stored in the nonvolatile memory 73, such as the abnormality details, the abnormality occurrence times, and the PM concentration detection values and turbidity detection values that are obtained between predetermined times prior to and after each abnormality occurrence time, can be used to easily and accurately execute a subsequent abnormality analysis.

The seawater scrubber 9 can similarly detect abnormalities. Also, since the $SO_2$ concentration detection values are stored in the storage unit 72, changes in the $SO_2$ concentration can easily be confirmed. When an abnormality occurs in the seawater scrubber 9, the information stored in the nonvolatile memory 73, such as the abnormality details, the abnormality occurrence times, and the $SO_2$ concentration detection values obtained between predetermined times prior to and after each abnormality occurrence time, can be used to easily and accurately execute a subsequent abnormality analysis.

The abnormality information and the maintenance information are transmitted to the host controller 80 of the vessel management company, allowing the vessel management company to accurately understand the operating state of the marine diesel engine exhaust gas treatment system.

With the communication controller (alarm information transmission unit) 76 that is connected to a portable telephone network and provided in the system management unit 71 as shown in Figs. 1 and 18, alarm information can be transmitted to the portable information terminal 77 of, for example, a pre-registered occupant via, for example, the Internet when various alarms are output. Therefore, the abnormalities that occur can be processed without constantly watching the monitor.

The overall operations of the foregoing embodiment are described next.

Exhaust gas emitted from the marine diesel engine 3 is first supplied to the NOx removal device 5, and a mixture of urea water and air is sprayed onto the exhaust gas in the NOx removal device 5, removing NOx from the exhaust gas.

Next, the exhaust gas, with NOx removed therefrom, is supplied to the electrostatic precipitator apparatus 7, and a PM contained in the exhaust gas is removed in the electrostatic precipitator apparatus main body 7A of the electrostatic precipitator apparatus 7. In this electrostatic precipitator apparatus main body 7A, the swirl flow forming portion 17 causes the PM-containing gas to flow from the gas introducing portion 16 of each of the electrode accommodating portions 15a to 15d into the cylindrical electrode 20 as a swirl flow. Therefore, when the PM-containing gas passes through the cylindrical electrode 20, the PM is charged by a corona discharge, as described above. The charged PM is moved through the through-holes 20a of the cylindrical electrode 20 by the Coulomb force and to the collecting space 22 outside the cylindrical electrode 20, and adheres, and is therefore collected, onto the outer circumferential surface of the cylindrical electrode 20 and the inner circumferential surface of the casing electrode 21.

The particulate matter collected in the collecting space 22 is recovered by the cyclone apparatus 7C, reduced in volume by a compressor (not shown) provided at the outlet of the cyclone apparatus 7C, and stored in a waste container such as a drum. Note that a heater may be placed inside the collecting space 22, so the collected PM can be burnt by the heat of the heater every predetermined period of time. In this case, a waste container is not necessary, and the cyclone apparatus 7C or a compressor can also be omitted, so that the initial cost and running cost can be reduced.

The exhaust gas, from which the PM is removed in the electrostatic precipitator apparatus 7, is supplied to the seawater scrubber 9, and seawater is sprayed onto the exhaust gas in order to remove SOx therefrom in the seawater scrubber 9. In so doing, the seawater containing SOx builds up at the bottom of the cylindrical container 9A in the seawater scrubber 9. Here, a seawater circulation passage, through which the seawater containing SOx is recovered by the seawater component regulator 9C and returned to the seawater scrubber 9 by the seawater circulator 9D, is formed.

Moreover, the seawater circulation passage is configured such that the ballast tank 42 having ballast seawater accumulated therein can be incorporated in the seawater circulation passage. Therefore, the ballast seawater can be used by the seawater scrubber. Thus, seawater to be used by the seawater scrubber does not have to be pumped up separately.

Furthermore, the ballast tank pump 47 for pumping up seawater into the ballast tank 42 can be used for pumping up seawater into the scrubber tank 41, eliminating the need to install a scrubber pump separately, and thereby reducing the number of parts and production cost.

Specifically, as shown in Fig. 8, at the time of loading when ballast seawater does not need to be pumped up into the ballast tank 42, the solenoid valve 49 is closed, whereas the solenoid valve 48 is opened. In this state, the ballast tank pump 47 is rotary driven, whereby seawater is pumped into the scrubber tank 41 through the filter 46. Once a predetermined amount of seawater is pumped up completely, the solenoid valve 48 is closed. Subsequently, while the solenoid valves 44, 51 and 53 are kept closed, the solenoid valves 43 and 50 are opened. In such a state, the circulator pump 45 is rotary driven, and consequently the seawater accumulated in the scrubber tank 41 is supplied to the spray nozzles 9B provided on the inside of the cylindrical container 9A of the seawater scrubber 9, and the spray nozzles 9B exert the function of spraying the seawater onto the exhaust gas to remove SOx from the exhaust gas.

The seawater containing SOx that is accumulated at the bottom of the cylindrical container 9A is sent to the seawater component regulator 9C. The electrolytic treatment unit 31 is placed in the seawater component regulator 9C, as shown in Fig. 8. Therefore, the electrolytic treatment unit 31 separates the oil content such as oil mist that is contained in the exhaust gas and introduced into the seawater. Next, the seawater is sent to the pH regulator 32 where a pH regulating agent is introduced into the seawater, whereby the pH of the seawater is regulated to a predetermined pH. The pH-regulated seawater is returned to the scrubber tank 41.

Since the seawater pumped into the scrubber tank 41 is cyclically used, the amount of seawater consumed by the seawater scrubber 9 can be covered only by the seawater pumped up into the scrubber tank 41. This eliminates the need to consume a large amount of seawater, minimizing the impacts on the environment.

When the amount of goods to be loaded is low, the ballast seawater is pumped into the ballast tank 42. In so doing, the solenoid valve 48 is closed, whereas the solenoid valve 49 is opened. In this state, the ballast tank pump 47 is driven, thereby accumulating the seawater in the ballast tank 42 through the filter 46. Once the ballast seawater is accumulated completely in the ballast tank 42, the solenoid valve 49 is closed, as well as the solenoid valves 43, 50 and 53, whereas the solenoid valves 44 and 51 are opened. As a result, the ballast seawater inside the ballast tank 42 is supplied by the circulator pump 45 to the spray nozzles 9B provided on the inside of the cylindrical container 9A of the seawater scrubber 9. The seawater that is accumulated at the bottom of the cylindrical container 9A is recovered by the seawater component regulator 9C. After the oil content is separated from the seawater and the pH of the seawater is regulated, the resultant seawater is returned by the seawater circulator 9D to the inside of the ballast tank 42, forming a seawater circulation passage.

In such a case, the scrubber tank 41 is not used, during which the scrubber tank 41 can be cleaned.

Additionally, when any of the oil content concentration OC, the pH, and the turbidity T of the circulated seawater of the seawater circulation passage is above the corresponding upper limit threshold (OCth, LpH, or UT) for a predetermined period of time, the seawater component controller 9F opens the solenoid valve 53 installed in the seawater circulator 9D. As a result, the circulated seawater is drained to the outside through the drainage piping system 52. At the same time, a necessary amount of seawater is newly pumped up from the outside sea by the ballast tank pump 47 through the filter 46. This can inhibit the occurrence of a situation where the oil content concentration, the pH, or the turbidity T of the circulated seawater exceeds a predetermined drainage regulation value to prevent the circulated seawater from being drained to the outside sea.

The exhaust gas component detectors are placed at the inlet-side and outlet-side piping systems in the electrostatic precipitator apparatus 7. The PM concentration detection values C1 and C2 detected by the exhaust gas component detectors and the turbidity T measured by the turbidity meter 58 are supplied to the electrostatic precipitator apparatus controller 7B. Based on these values, in the electrostatic precipitator apparatus 7, currents to be supplied to the electrodes of the electrostatic precipitator apparatus main body 7A are controlled in such a manner that the PM removal rate falls within a prescribed range.

Similarly in the seawater scrubber 9 as well, the exhaust gas component detector disposed at its outlet-side piping system detects the concentrations of $SO_2$ and $CO_2$ remaining in the exhaust gas. Subsequently, the detected $SO_2$ concentration and $CO_2$ concentration are supplied to the scrubber controller 9E. Based on these values, the scrubber controller 9E executes an arithmetic process (= SO2/CO2) to set a target $SO_2$ concentration prescribed range, and controls the rotating speed of the circulator pump 45 in such a manner that the concentration of the $SO_2$ remaining exhaust gas falls within a preset $SO_2$ concentration prescribed range. In addition, the seawater component controller 9F controls an electrolysis current value of the electrolytic treatment unit 31 and the pH regulating agent input amount of the pH regulator 32 based on the detection values of the oil content meter 56 and the pH meter 57 so as to obtain proper states of the components of the circulated seawater.

In addition, the seawater component controller 9F controls the electrolysis current value of the scale removal unit 34 based on the detection value of the flow meter 54 in order to remove the scales attached to the inside of the piping system.

The foregoing embodiment has described a case in which the particulate matter is collected in the half-closed space between the cylindrical electrode 20 and the casing electrode 21 of the electrostatic precipitator apparatus 7; however, the configuration of the embodiment is not limited thereto. In the electrostatic precipitator apparatus 7, the discharge electrode and the dust collecting electrode may be provided within the same space, wherein the PM may be charged by the discharge electrode and removed by the dust collecting electrode.

The foregoing embodiment has also described a case in which the PM-containing gas is introduced in the form of a swirl flow by the swirl flow forming portion 17; however, the configuration of the embodiment is not limited thereto. When reducing pressure loss caused by the swirl flow forming portion 17, the swirl flow forming portion 17 may be omitted, and the PM-containing gas may be let flow as it is.

The foregoing embodiment has also described a case in which the scrubber controller 9E controlling the seawater scrubber 9 controls the concentration of $SO_2$ contained in the emitted exhaust gas to a target value; however, the configuration of the embodiment is not limited thereto. As with the electrostatic precipitator apparatus 7, the scrubber controller 9E may calculate the SOx removal rate corresponding to the PM collection rate DCE, to control the SOx removal rate to fall within a predetermined range.

The foregoing embodiment has also described a case in which the electrolytic treatment unit 31 for electrolyzing the recovered seawater to separate the oil content therefrom is used as the oil content separator; however, the configuration of the embodiment is not limited thereto. A centrifugal separator for centrifugally separating the oil content from the recovered seawater may be used in place of the electrolytic treatment unit 31.

Also, in place of the electrolytic treatment unit 31, an electromagnetic treatment unit for electromagnetically separating the oil content from the recovered seawater may be used. Electromagnetic separation of the oil content employs a system for separating the oil content of the seawater, in which a coil connected to the power is mounted to the outside of a piping system through which the recovered seawater passes, and transmitting frequency energy modulated by an electric signal to the inside of the piping system through the coil. The electromagnetic processing unit can control the separation of the oil content of the seawater by controlling the voltage and frequency transmitted to the coil. When using this electromagnetic processing unit, the coil connected to the power may simply be mounted to the outside of the piping system, eliminating the need to perform construction work, which is advantageous costwise.

Furthermore, as the oil content separator, a filter may be used in addition to the electrolytic treatment unit 31, the centrifugal separator, or the electromagnetic processing unit. Accordingly, the efficiency of oil content separation can further be improved. As the oil content separator, a filter can be used alone in place of the electrolytic treatment unit 31. In this case, however, the control of steps S62 to S65 shown in Fig. 9 is not performed.

The foregoing embodiment has also described a case in which direct-insert-type laser analyzers are used as the first to third laser analyzers LA1 to LA3; however, the configuration of the embodiment is not limited thereto. Sampling-type laser analyzers may be used as the first to third laser analyzers LA1 to LA3.

The foregoing embodiment has also described that the PM concentration detection analyzers of the first to third laser analyzers LA1 to LA3 each have a laser element that emits a visible region laser beam for detecting the PM concentration; however, the configuration of the embodiment is not limited thereto. A configuration having a laser element that emits a near-infrared region laser beam in place of a visible region laser beam may be employed.

The foregoing embodiment has described that the $SO_2$ concentration detection analyzers of the second laser analyzer LA2 and the third laser analyzer LA3 each have a laser element that emits a mid-infrared region laser beam for detecting the $SO_2$ concentration; however, the configuration of the embodiment is not limited thereto. A configuration having a laser element that emits an ultraviolet region laser beam in place of the mid-infrared region laser beam may be employed.

The foregoing embodiment has also described that the pH regulator 32 executes the pH regulation process by introducing a pH regulating agent; however, the configuration of the embodiment is not limited thereto. A configuration of performing the pH regulation process through electrolytic treatment instead of introducing the pH regulating agent may be employed.

In the foregoing embodiment, the seawater circulator 9D drains the circulated seawater and pumps up seawater based on the circulated seawater monitoring process of the seawater component controller 9F; however, the configuration of the embodiment is not limited thereto. The seawater circulator 9D may be configured as follows. Upon reception of a circulation stop command from the drainage and pump-up determination unit 95 of the seawater component controller 9F, the seawater circulator 9D drains the seawater, the component of which is regulated by the seawater component regulator 9C, without returning it to the seawater scrubber 9. In addition, upon reception of a circulation start command from the drainage and pump-up determination unit 95 of the seawater component controller 9F, the seawater circulator 9D cyclically supplies the seawater, the component of which is regulated by the seawater component regulator 9C, to the seawater scrubber 9.

In the foregoing embodiment, the scale removal unit 34 is of electrolysis type that executes an electrolytic treatment to remove scaled attached to the inside of the piping system; however, the configuration of the embodiment is not limited thereto. In place of the electrolysis type scale removal unit, the scale removal unit 34 can also be of an electromagnetic type for executing an electromagnetic process to peel the scales attached to the inside of the piping system. In such a case, the seawater component controller 9F can peel the scales attached to the inside of the piping system by controlling the frequency and voltage of the electromagnetic scale removal unit 34.

The foregoing embodiment has also described a case in which the received abnormality information and the operation data obtained at predetermined time periods prior to and after the relevant abnormality occurrence time are stored in the nonvolatile memory 73. However, it is only necessary to store at least the operation data obtained a certain period of time prior to the abnormality occurrence time.

INDUSTRIAL APPLICABILITY

The present invention can provide a marine diesel engine exhaust gas treatment system that is capable of reliably removing a PM (particulate matter) and SOx (sulfur oxides) of exhaust gas emitted from a marine diesel engine by means of an electrostatic precipitator apparatus and a seawater scrubber respectively.

Claims

1. A marine diesel engine exhaust gas treatment system for treating exhaust gas resulting from combustion in a marine diesel engine (3) equipped in a vessel (1), the marine diesel engine exhaust gas treatment system comprising:

an electrostatic precipitator apparatus (7) that is configured to collect a particulate matter (PM) of exhaust gas emitted from the marine diesel engine (3);
a seawater scrubber (9) that is configured to spray seawater to the exhaust gas from which the particulate matter (PM) is removed by the electrostatic precipitator apparatus (7), to remove sulfur oxides from the exhaust gas;
an exhaust gas component detector (LA1, LA2, LA3) that is configured to detect a component of the exhaust gas prior to and after the treatment by the electrostatic precipitator apparatus (7) and the seawater scrubber (9), wherein the exhaust gas component detector (LA1, LA2, LA3) is configured to detect the particulate matter (PM) concentration of the exhaust gas and to detect the sulfur oxides ($SO_2$) concentration of the exhaust gas;
wherein the exhaust gas component detector (LA1, LA2, LA3) is configured by first (LA1) and second (LA2) laser analyzers that are placed respectively at an inlet side and an outlet side of the electrostatic precipitator apparatus (7) and a third (LA3) laser analyzer placed at an outlet side of the seawater scrubber (9), wherein the first laser analyzer (LA1) is configured to detect a particulate matter (PM) concentration, the second laser analyzer (LA2) is configured to detect a particulate matter (PM) concentration and a $SO_2$ concentration, and the third laser analyzer (LA3) is configured to detect a particulate matter (PM) concentration, a $SO_2$ concentration, and a $CO_2$ concentration,
a seawater component regulator (9C) that is configured to recover the seawater sprayed by the seawater scrubber (9), to perform component regulation on the recovered seawater;
a seawater circulator (9D) that is configured to return, to the seawater scrubber (9), the seawater that is subjected to the component regulation by the seawater component regulator (9C);
a water quality measurement unit (33) that is configured to monitor a water quality of the seawater in the seawater component regulator (9C), wherein the water quality measurement unit (33) has a pH meter configured to measure a pH and an oil content meter configured to measure an oil content concentration;
an exhaust gas treatment controller that is configured to regulate an operating state of the electrostatic precipitator apparatus (7) and an operating state of the seawater scrubber (9) in such a manner that the particulate matter (PM) concentration and the sulfur oxides ($SO_2$) concentration of the treated exhaust gas that is detected by the exhaust gas component detector (LA1, LA2, LA3) falls within a prescribed range; and
a seawater component controller (9F) that is configured to regulate an operating state of the seawater component regulator (9C) in such a manner that a seawater component detected by the water quality measurement unit (33) falls within a prescribed range, wherein the seawater component controller (9F) is configured to control the seawater component regulator (9C) in such a manner that the oil content concentration and the pH fall within a set range.

2. The marine diesel engine exhaust gas treatment system according to claim 1,
wherein
the water quality measurement unit (33) has a turbidity meter that is configured to measure a concentration of a turbid component contained in the seawater recovered from the seawater scrubber (9).

3. The marine diesel engine exhaust gas treatment system according to claim 2,

wherein an electrostatic precipitator apparatus controller of the electrostatic precipitator apparatus (7) is configured to control the electrostatic precipitator apparatus (7) based on the turbidity measured by the water quality measurement unit (33).

4. The marine diesel engine exhaust gas treatment system according to any one of claims 2 to 3, wherein the exhaust gas treatment controller has an electrostatic precipitator apparatus controller (7B) that is configured to control the electrostatic precipitator apparatus (7), and a scrubber controller (9E) that is configured to control a seawater spray amount of the seawater scrubber (9),

the electrostatic precipitator apparatus controller, (7B) the scrubber controller (9E), and the seawater component controller (9F) that is configured to control a seawater component of the seawater scrubber (9) are connected to a system management unit (71) by a network, and

the system management unit (71) has a data accumulation unit that is not only configured to accumulate the particulate matter (PM) concentration, the $SO_2$ concentration, and the $CO_2$ concentration detected by the exhaust gas component detector (LA1, LA2, LA3) as cumulative data, but also to accumulate the pH, the turbidity, and the oil content concentration measured by the water quality measurement unit (33) as cumulative data.

5. The marine diesel engine exhaust gas treatment system according to claim 4, wherein
the seawater component regulator (9C) has an oil content separator that is configured to separate an oil content from the seawater recovered from the seawater scrubber, and a pH regulator (32) that is configured to regulate a pH of the recovered seawater.

the oil content separator has an electrolytic treatment unit that is configured to electrolyze the seawater recovered from the seawater scrubber to separate the oil content from the recovered seawater,

the electrostatic precipitator apparatus controller (7B) is configured to monitor an operating state of the electrostatic precipitator apparatus (7) based on the particulate matter (PM) concentration detected by the exhaust gas component detector (LA1, LA2, LA3), an applied current value of the electrostatic precipitator apparatus (7), and the turbidity measured by the water quality measurement unit (33), and to transmit abnormality information to the system management unit (71) when an abnormality is detected in the electrostatic precipitator apparatus (7),

the scrubber controller (9E) is configured to monitor an operating state of the seawater scrubber (9) based on the $SO_2$ concentration detected by the exhaust gas component detector (LA1, LA2, LA3) and a pipe flow rate value of the seawater scrubber (9), and to transmit abnormality information to the system management unit (71) when an abnormality is detected in the seawater scrubber (9),

the seawater component controller (9F) is configured to monitor an operating state of the electrolytic treatment unit and an operating state of the pH regulator based on the pH and the oil content concentration measured by the water quality measurement unit (33), a current command value of the electrolytic treatment unit, and a pH regulating agent introducing command value of the pH regulator, and to transmit abnormality information to the system management unit (71) when an abnormality is detected in the electrolytic treatment unit or the pH regulator, and

the system management unit (71) has an alarm generating unit (75) that is configured to generate an alarm when the alarm generating unit receives at least one of these abnormality information items.

6. The marine diesel engine exhaust gas treatment system according to claim 5,
wherein
the exhaust gas treatment controller has a first maintenance time determination unit (7c, 64) that is configured to monitor the operating state of the electrostatic precipitator apparatus (7) and the operating state of the seawater scrubber (9) based on the particulate matter (PM) concentration and the $SO_2$ concentration detected by the exhaust gas component detector (LA1, LA2, LA3), the applied current value of the electrostatic precipitator apparatus (7), the turbidity measured by the water quality measurement unit (33), and the pipe flow rate value of the seawater scrubber (9), and to determine maintenance times for the electrostatic precipitator apparatus (7) and the seawater scrubber (9) based on the monitoring results, and

the seawater component controller (9F) has a second maintenance time determination unit (94) that is configured to monitor the operating state of the electrolytic treatment unit and the operating state of the pH regulator based on the pH and the oil content concentration measured by the water quality measurement unit (33) and the applied current value of the electrolytic treatment unit, and to determine maintenance times for the electrolytic treatment unit and the pH regulator.

7. The marine diesel engine exhaust gas treatment system according to any one of claims 2 to 6, wherein the seawater component controller (9F) is configured to monitor a component of circulated seawater that is recovered from the seawater scrubber (9) in order to be cyclically used, based on the pH, the turbidity, and the oil content concentration measured by the water quality measurement unit (33), and to transmit a drainage and seawater pump-up command for the circulated seawater to the seawater circulator (9D) based on the monitoring result, and upon reception of the command, the seawater circulator is configured to drain the circulated seawater, thereafter pumps up a necessary amount of seawater, and cyclically supplies the pumped-up seawater to the seawater scrubber (9).

8. The marine diesel engine exhaust gas treatment system according to any one of claims 1 to 6, wherein, upon reception of a circulation stop command from the seawater component controller (9F), the seawater circulator is configured to drain the seawater subjected to the component regulation by the seawater component regulator (9C), without returning the seawater to the seawater scrubber (9), and upon reception of a circulation start command from the seawater component controller (9F), the seawater circulator (9D) is configured to cyclically supply, to the seawater scrubber (9), the seawater subjected to the component regulation by the seawater component regulator (9C).

9. The marine diesel engine exhaust gas treatment system according to claim 2 or 3, wherein an electrostatic precipitator apparatus controller of the electrostatic precipitator apparatus (7) is configured to control currents of the electrostatic precipitator apparatus (7) in such a manner that the concentration of the turbidity measured by the water quality measurement unit (33) falls within a preset prescribed range.

10. The marine diesel engine exhaust gas treatment system according to any one of claims 1 to 9, wherein the electrostatic precipitator apparatus (7) has a heater configured to burn collected particulate matter (PM) by the heat of the heater every predetermined period of time, wherein the particulate matter (PM) is collected in the electrostatic precipitator apparatus at an outer circumferential surface of a cylindrical electrode (20) and an inner circumferential surface of a casing electrode (21) that configure a collecting space (22), where the heater is placed..

11. The marine diesel engine exhaust gas treatment system according to any one of claims 1 to 10 is arranged such that
the exhaust gas without particulate matter (PM), emitted from the electrostatic precipitator apparatus (7), is supplied to an economizer (8) and subjected to heat exchange, and consequently the exhaust heat is recovered and supplied to the seawater scrubber (9).

12. The marine diesel engine exhaust gas treatment system according to any one of claims 6 to 11,

wherein the scrubber controller (9E) of the exhaust gas treatment controller is configured to determine whether an arithmetic result of the $SO_2$ concentration detection value and the $CO_2$ concentration detection value (= $SO_2/CO_2$) falls within a prescribed range that is set beforehand,
when the arithmetic result of $SO_2/CO_2$ exceeds the prescribed range, the exhaust gas treatment controller is configured to increase the rotating speed of the circulator pump (45) in such a manner that the piping system flow rate value increases, and
when the arithmetic result of $SO_2/CO_2$ is less than the prescribed range, the exhaust gas treatment controller is configured to lower the rotating speed of the circulator pump (45) in such a manner that the piping system flow rate value drops.

13. The marine diesel engine exhaust gas treatment system according to any one of claims 7 to 11,
wherein a $SO_2$ concentration command value generating unit (61a) of a spray controller (61) in the scrubber controller (9E) is configured to receive input of the $SO_2$ concentration and $CO_2$ concentration detected by the third laser analyzer (LA3), and configured to execute an arithmetic operation of $SO_2/CO_2$, and to generate a $SO_2$ concentration target value,
wherein a subtractor (61b) of the spray controller (61) is configured to obtain a concentration deviation by subtracting the generated $SO_2$ concentration target value and the $SO_2$ concentration detected by the third laser analyzer (LA3),
wherein a feedback controller (61c) of the spray controller (61) is configured to execute a PID control process and thereby to calculate a feedback command value that matches the $SO_2$ concentration detected by the third laser analyzer (LA3) and the $SO_2$ concentration target value,
wherein a feedforward controller (61d) of the spray controller (61) is configured to calculate a feedforward command value corresponding to a change in the $SO_2$ concentration detected by the second laser analyzer (LA2) that occurs at the inlet side of the seawater scrubber (9),
wherein an adder (61e) of the spray controller (61) is configured to add the feedback command value to the feedforward command value to calculate a seawater scrubber spray command value, and supplies this seawater scrubber spray command value to the pump drive circuit,
wherein the spray controller (61) is further configured to drive the circulation pump based on the seawater scrubber spray command value.

**Patentansprüche**

1. Schiffsdieselmotorabgasbehandlungssystem zum Behandeln von Abgas, das aus der Verbrennung in einem Schiffsdieselmotor (3) resultiert, der in einem Schiff (1) eingebaut ist, wobei das Schiffsdieselmotorabgasbehandlungssystem umfasst:

eine elektrostatische Abscheidevorrichtung (7), die konfiguriert ist, Feststoffpartikel (PM) von Abgas, das von dem Schiffsdieselmotor (3) emittiert wird, zu sammeln;

einen Meerwasserscrubber (9), der konfiguriert ist, Meerwasser auf das Abgas zu sprühen, aus dem die Feststoffpartikel (PM) durch die elektrostatische Abscheidevorrichtung (7) entfernt werden, um Schwefeloxide aus dem Abgas zu entfernen;

einen Abgaskomponentendetektor (LA1, LA2, LA3), der konfiguriert ist, eine Komponente des Abgases vor und nach der Behandlung durch die elektrostatische Abscheidevorrichtung (7) und den Meerwasserscrubber (9) zu detektieren, wobei der Abgaskomponentendetektor (LA1, LA2, LA3) konfiguriert ist, die Feststoffpartikel- (PM) - Konzentration des Abgases zu detektieren und die Schwefeloxid- ($SO_2$) -Konzentration des Abgases zu detektieren;

wobei der Abgaskomponentendetektor (LA1, LA2, LA3) konfiguriert ist durch erste (LA1) und zweite (LA2) Laseranalysatoren, die entsprechend an einer Eintrittsseite und einer Austrittsseite der elektrostatischen Abscheidevorrichtung (7) angeordnet sind, und eine dritten (LA3) Laseranalysator, der an einer Austrittsseite des Meerwasserscrubbers (9) angeordnet ist, wobei der erste Laseranalysator (LA1) konfiguriert ist, eine Feststoffpartikel- (PM) -Konzentration zu detektieren, der zweite Laseranalysator (LA2) konfiguriert ist, eine Feststoffpartikel- (PM) -Konzentration und eine $SO_2$-Konzentration zu detektieren und der dritte Laseranalysator (LA3) konfiguriert ist, eine Feststoffpartikel- (PM) - Konzentration, eine $SO_2$-Konzentration und eine $CO_2$-Konzentration zu detektieren,

einen Meerwasserkomponentenregulator (9C), der konfiguriert ist, das Meerwasser wiederzugewinnen, das durch den Meerwasserscrubber (9) versprüht wird, um eine Komponentenregulierung an dem wiedergewonnenen Meerwasser auszuführen;

einen Meerwasserzirkulator (9D), der konfiguriert ist, das Meerwasser, das der Komponentenregulierung durch den Meerwasserkomponentenregulator (9C) unterworfen wird, zu dem Meerwasserscrubber (9) zurückzuführen;

eine Wassergütemesseinheit (33), die konfiguriert ist, eine Wassergüte des Meerwassers in dem Meerwasserkomponentenregulator (9C) zu überwachen, wobei die Wassergütemesseinheit (33) ein pH-Messgerät, das konfiguriert ist, einen pH-Wert zu messen, und ein Ölgehaltmessgerät, das konfiguriert ist, eine Ölgehaltkonzentration zu messen, aufweist;

eine Abgasbehandlungssteuerung, die konfiguriert ist, einen Betriebszustand der elektrostatischen Abscheidevorrichtung (7) und einen Betriebszustand des Meerwasserscrubbers (9) derart zu steuern, dass die Feststoffpartikel-(PM) - Konzentration und die Schwefeloxid-($SO_2$) -Konzentration des behandelten Abgases, das durch den Abgaskomponentendetektor (LA1, LA2, LA3) detektiert wird, in einen vorgeschriebenen Bereich fällt; und

eine Meerwasserkomponentensteuerung (9F), die konfiguriert ist, einen Betriebszustand des Meerwasserkomponentenregulators (9C) derart zu steuern, dass eine Meerwasserkomponente, die durch die Wassergütemesseinheit (33) detektiert wird, in einen vorgeschriebenen Bereich fällt, wobei die Meerwasserkomponentensteuerung (9F) konfiguriert ist, den Meerwasserkomponentenregulator (9C) derart zu steuern, dass die Ölgehaltkonzentration und der pH-Wert in einen Sollbereich fallen.

2. Schiffsdieselmotorabgasbehandlungssystem nach Anspruch 1, wobei
die Wassergütemesseinheit (33) ein Trübungsmessgerät aufweist, das konfiguriert ist, eine Konzentration einer trüben Komponente zu messen, die in dem von dem Meerwasserscrubber (9) wiedergewonnenen Meerwasser enthalten ist.

3. Schiffsdieselmotorabgasbehandlungssystem nach Anspruch 2, wobei eine elektrostatische Abscheidevorrichtungssteuerung der elektrostatischen Abscheidevorrichtung (7) konfiguriert ist, die elektrostatische Abscheidevorrichtung (7) basierend auf der Trübung, die durch die Wassergütemesseinheit (33) gemessen wird, zu steuern.

4. Schiffsdieselmotorabgasbehandlungssystem nach einem der Ansprüche 2 bis 3, wobei
die Abgasbehandlungssteuerung eine elektrostatische Abscheidevorrichtungssteuerung (7B) aufweist, die konfiguriert ist, die elektrostatische Abscheidevorrichtung (7) zu steuern, und eine Scrubbersteuerung (9E), die konfiguriert ist, eine Meerwassersprühmenge des Meerwasserscrubbers (9) zu steuern,

die elektrostatische Abscheidevorrichtungssteuerung (7B), die Scrubbersteuerung (9E) und die Meerwasserkomponentensteuerung (9F), die konfiguriert ist, eine Meerwasserkomponente des Meerwasserscrubbers (9) zu steuern, durch ein Netzwerk mit einer Systemmanagementeinheit (71) verbunden sind und die Systemmanagementeinheit (71) eine Datenerfassungseinheit aufweist, die nicht nur konfiguriert ist, die Feststoffpartikel- (PM) -Konzentration, die

$SO_2$-Konzentration und die $CO_2$-Konzentration, die durch den Abgaskomponentendetektor (LA1, LA2, LA3) detektiert werden, als kumulative Daten zu erfassen, sondern auch den pH-Wert, die Trübung und die Ölgehaltkonzentration, die durch die Wassergütemesseinheit (33) gemessen werden, als kumulative Daten zu erfassen.

5. Schiffsdieselmotorabgasbehandlungssystem nach Anspruch 4, wobei
der Meerwasserkomponentenregulator (9C) einen Ölgehaltabscheider, der konfiguriert ist, einen Ölgehalt von dem Meerwasser zu trennen, das von dem Meerwasserscrubber wiedergewonnen wurde, und einen pH-Regulator (32) aufweist, der konfiguriert ist, einen pH-Wert des wiedergewonnenen Meerwassers zu regulieren,
der Ölgehaltabscheider eine elektrolytische Behandlungseinheit aufweist, die konfiguriert ist, das von dem Meerwasserscrubber wiedergewonnene Meerwasser zu elektrolysieren, um den Ölgehalt von dem wiedergewonnenen Meerwasser zu trennen,
die elektrostatische Abscheidevorrichtungssteuerung (7B) konfiguriert ist, einen Betriebszustand der elektrostatischen Abscheidevorrichtung (7) basierend auf der Feststoffpartikel- (PM) -Konzentration, die durch den Abgaskomponentendetektor (LA1, LA2, LA3) detektiert wird, einem angewandten Stromwert der elektrostatischen Abscheidevorrichtung (7) und der Trübung, die durch die Wassergütemesseinheit (33) gemessen wird, zu überwachen und Anomalieinformationen an die Systemmanagementeinheit (71) zu senden, wenn eine Anomalie in der elektrostatischen Abscheidevorrichtung (7) detektiert wird,
die Scrubbersteuerung (9E) konfiguriert ist, einen Betriebszustand des Meerwasserscrubbers (9) basierend auf der $SO_2$-Konzentration, die durch den Abgaskomponentendetektor (LA1, LA2, LA3) detektiert wird, und einen Rohrdurchfluss des Meerwasserscrubbers (9) zu überwachen und Anomalieinformationen an die Systemmanagementeinheit (71) zu senden, wenn eine Anomalie in dem Meerwasserscrubber (9) detektiert wird,
die Meerwasserkomponentensteuerung (9F) konfiguriert ist, einen Betriebszustand der elektrolytischen Behandlungseinheit und einen Betriebszustand des pH-Regulators basierend auf dem pH-Wert und der Ölgehaltkonzentration, die durch die Wassergütemesseinheit (33) gemessen wird, einem Stromsollwert der elektrolytischen Behandlungseinheit und einem pH-Regulierungsmittel, das einen Sollwert des pH-Regulators einführt, zu überwachen und Anomalieinformationen an die Systemmanagementeinheit (71) zu senden, wenn eine Anomalie in der elektrolytischen Behandlungseinheit oder dem pH-Regulator detektiert wird, und
die Systemmanagementeinheit (71) eine Alarmerzeugungseinheit (75) aufweist, die konfiguriert ist, einen Alarm zu erzeugen, wenn die Alarmerzeugungseinheit mindestens eines dieser Anomalieinformationselemente empfängt.

6. Schiffsdieselmotorabgasbehandlungssystem nach Anspruch 5, wobei
die Abgasbehandlungssteuerung eine erste Wartungszeitbestimmungseinheit (7c, 64) aufweist, die konfiguriert ist, den Betriebszustand der elektrostatischen Abscheidevorrichtung (7) und den Betriebszustand des Meerwasserscrubbers (9) basierend auf der Feststoffpartikel-(PM) -Konzentration und der $SO_2$-Konzentration, die durch den Abgaskomponentendetektor (LA1, LA2, LA3) detektiert werden, dem angewandten Stromwert der elektrostatischen Abscheidevorrichtung (7), der Trübung, die durch die Wassergütemesseinheit (33) gemessen wird, und dem Rohrdurchfluss des Meerwasserscrubbers (9) zu überwachen und Wartungszeiten für die elektrostatische Abscheidevorrichtung (7) und den Meerwasserscrubber (9) basierend auf den Überwachungsresultaten zu bestimmen, und
die Meerwasserkomponentensteuerung (9F) eine zweite Wartungszeitbestimmungseinheit (94) aufweist, die konfiguriert ist, den Betriebszustand der elektrolytischen Behandlungseinheit und den Betriebszustand des pH-Regulators basierend auf dem pH-Wert und der Ölgehaltkonzentration, die durch die Wassergütemesseinheit (33) gemessen werden, und dem angewandten Stromwert der elektrolytischen Behandlungseinheit zu überwachen und Wartungszeiten für die elektrolytische Behandlungseinheit und den pH-Regulator zu bestimmen.

7. Schiffsdieselmotorabgasbehandlungssystem nach einem der Ansprüche 2 bis 6, wobei
die Meerwasserkomponentensteuerung (9F) konfiguriert ist, eine Komponente von umgewälztem Meerwasser, das aus dem Meerwasserscrubber (9) wiedergewonnen wird, sodass es zyklisch verwendet wird, basierend auf dem pH-Wert, der Trübung und der Ölgehaltkonzentration, die durch die Wassergütemesseinheit (33) gemessen werden, zu überwachen und basierend auf dem Überwachungsresultat einen Ablass- und Meerwasserhochpumpbefehl für das umgewälzte Meerwasser an den Meerwasserzirkulator (9D) zu senden, und
der Meerwasserzirkulator bei Empfang des Befehls konfiguriert ist, das umgewälzte Meerwasser abzulassen, danach eine erforderliche Menge an Meerwasser hochzupumpen und das hochgepumpte Meerwasser zyklisch an den Meerwasserscrubber (9) bereitzustellen.

8. Schiffsdieselmotorabgasbehandlungssystem nach einem der Ansprüche 1 bis 6, wobei nach Empfang eines Zirkulationsstoppbefehls von der Meerwasserkomponentensteuerung (9F) der Meerwasserzirkulator konfiguriert ist, das Meerwasser, das der Komponentenregulierung durch den Meerwasserkomponentenregulator (9C) unterworfen ist, abzulassen, ohne das Meerwasser wieder zu dem Meerwasserscrubber (9) zurückzuführen, und bei Empfang eines Zirkulationsstartbefehls von der Meerwasserkomponentensteuerung (9F) der Meerwasserzirkulator (9D) konfiguriert ist, das Meerwasser, das der Komponentenregulierung durch den Meerwasserkomponentenregulator (9C) unterworfen ist, zyklisch an den Meerwasserscrubber (9) bereitzustellen.

9. Schiffsdieselmotorabgasbehandlungssystem nach Anspruch 2 oder 3, wobei eine elektrostatische Abscheidevorrichtungssteuerung der elektrostatischen Abscheidevorrichtung (7) konfiguriert ist, Ströme der elektrostatischen Abscheidevorrichtung (7) derart zu steuern, dass die Konzentration der Trübung, die durch die Wassergütemesseinheit (33) gemessen wird, in einen voreingestellten vorgeschriebenen Bereich fällt.

10. Schiffsdieselmotorabgasbehandlungssystem nach einem der Ansprüche 1 bis 9, wobei die elektrostatische Abscheidevorrichtung (7) eine Heizvorrichtung aufweist, die konfiguriert ist, gesammelte Feststoffpartikel (PM) durch die Wärme der Heizvorrichtung jeden vorbestimmten Zeitraum zu verbrennen, wobei die Feststoffpartikel (PM) in der elektrostatischen Abscheidevorrichtung an einer äußeren Umfangsfläche einer zylindrischen Elektrode (20) und einer inneren Umfangsfläche einer Gehäuseelektrode (21), die einen Sammelraum (22) konfigurieren, in dem die Heizvorrichtung angeordnet ist, gesammelt werden.

11. Schiffsdieselmotorabgasbehandlungssystem nach einem der Ansprüche 1 bis 10, das derart ausgeführt ist, dass das Abgas ohne Feststoffpartikel (PM), das von der elektrostatischen Abscheidevorrichtung (7) emittiert wird, an einen Economizer (8) bereitgestellt und einem Wärmeaustausch unterworfen wird und daher die Abhitze wiedergewonnen und an den Meerwasserscrubber (9) bereitgestellt wird.

12. Schiffsdieselmotorabgasbehandlungssystem nach einem der Ansprüche 6 bis 11, wobei die Scrubbersteuerung (9E) der Abgasbehandlungssteuerung konfiguriert ist, zu bestimmen, ob ein arithmetisches Ergebnis des $SO_2$-Konzentrationsdetektionswerts und des $CO_2$-Konzentrationsdetektionswerts (= $SO_2/CO_2$) in einen vorgeschriebenen Bereich fällt, der im Voraus eingestellt wird, wenn das arithmetische Ergebnis von $SO_2/CO_2$ den vorgeschriebenen Bereich überschreitet, die Abgasbehandlungssteuerung konfiguriert ist, die Drehgeschwindigkeit der Zirkulationspumpe (45) derart zu erhöhen, dass sich der Rohrleitungssystemströmungsgeschwindigkeitswertzuwachs erhöht, und wenn das arithmetische Ergebnis von $SO_2/CO_2$ kleiner als der vorgeschriebene Bereich ist, die Abgasbehandlungssteuerung konfiguriert ist, die Drehgeschwindigkeit der Umwälzpumpe (45) derart zu verringern, dass der Rohrleitungssystemströmungsgeschwindigkeitswert absinkt.

13. Schiffsdieselmotorabgasbehandlungssystem nach einem der Ansprüche 7 bis 11, wobei eine $SO_2$-Konzentrationssollwerterzeugungseinheit (61a) einer Sprühsteuerung (61) in der Scrubbersteuerung (9E) konfiguriert ist, eine Eingabe der $SO_2$-Konzentration und $CO_2$-Konzentration zu empfangen, die durch den dritten Laseranalysator (LA3) detektiert werden, und konfiguriert ist, eine arithmetische Operation von $SO_2/CO_2$ auszuführen und einen $SO_2$-Konzentrationszielwert zu erzeugen, wobei ein Subtrahierer (61b) der Sprühsteuerung (61) konfiguriert ist, eine Konzentrationsabweichung durch Subtrahieren des erzeugten $SO_2$-Konzentrationszielwerts und der $SO_2$-Konzentration, die durch den dritten Laseranalysator (LA3) detektiert wird, zu erlangen, wobei eine Rückkopplungssteuerung (61c) der Sprühsteuerung (61) konfiguriert ist, einen PID-Regelungsprozess auszuführen und dadurch einen Rückkopplungssollwert, der mit der $SO_2$-Konzentration übereinstimmt, die durch den dritten Laseranalysator (LA3) detektiert wird, und den $SO_2$-Konzentrationszielwert, zu berechnen, wobei eine Vorwärtskopplungssteuerung (61d) der Sprühsteuerung (61) konfiguriert ist, einen Vorwärtskopplungssollwert zu berechnen, der einer Änderung der $SO_2$-Konzentration entspricht, die durch den zweiten Laseranalysator (LA2) detektiert wird und an der Eintrittsseite des Meerwasserscrubbers (9) auftritt, wobei ein Addierer (61e) der Sprühsteuerung (61) konfiguriert ist, den Rückkopplungssollwert zu dem Vorwärtskopplungssollwert zu addieren, um einen Meerwasserscrubbersprühsollwert zu berechnen und diesen Meerwasserscrubbersprühsollwert an die Pumpenantriebsschaltung bereitzustellen, wobei die Sprühsteuerung (61) ferner konfiguriert ist, die Zirkulationspumpe basierend auf dem Meerwasserscrubbersprühsollwert anzusteuern.

**Revendications**

1. Système de traitement des gaz d'échappement d'un moteur diesel marin permettant de traiter des gaz d'échappement résultant de la combustion dans un moteur diesel marin (3) dont est équipé un navire (1), le système de traitement des gaz d'échappement du moteur diesel marin comprenant :

un appareil de dépoussiérage électrostatique (7) qui est conçu pour collecter des particules (PM) de gaz d'échappement émises par le moteur diesel marin (3) ;
un épurateur à eau de mer (9) qui est conçu pour pulvériser de l'eau de mer sur les gaz d'échappement dont les particules (PM) ont été éliminées par l'appareil de dépoussiérage électrostatique (7), afin d'éliminer les oxydes de soufre des gaz d'échappement ;
un détecteur de composants des gaz d'échappement (LA1, LA2, LA3) qui est conçu pour détecter un composant des gaz d'échappement avant et après le traitement par l'appareil de dépoussiérage électrostatique (7) et l'épurateur à eau de mer (9), dans lequel le détecteur de composants des gaz d'échappement (LA1, LA2, LA3) est conçu pour détecter la concentration en particules (PM) des gaz d'échappement et pour détecter la concentration en oxydes de soufre (SO$_2$) des gaz d'échappement ;
dans lequel le détecteur de composants des gaz d'échappement (LA1, LA2, LA3) se compose d'un premier (LA1) et d'un deuxième (LA2) analyseur laser qui sont placés respectivement côté entrée et côté sortie de l'appareil de dépoussiérage électrostatique (7) et d'un troisième (LA3) analyseur laser placé côté sortie de l'épurateur à eau de mer (9), dans lequel le premier analyseur laser (LA1) est conçu pour détecter une concentration en particules (PM), le deuxième analyseur laser (LA2) est conçu pour détecter une concentration en particules (PM) et une concentration en SO$_2$, et le troisième analyseur laser (LA3) est conçu pour détecter une concentration en particules (PM), une concentration en SO$_2$ et une concentration en CO$_2$,
un régulateur de composants de l'eau de mer (9C) qui est conçu pour récupérer l'eau de mer pulvérisée par l'épurateur à eau de mer (9), afin d'effectuer une régulation des composants sur l'eau de mer récupérée ;
un circulateur d'eau de mer (9D) qui est conçu pour renvoyer, dans l'épurateur à eau de mer (9), l'eau de mer qui a été soumise à une régulation des composants par le régulateur de composants de l'eau de mer (9C) ;
une unité de mesure de la qualité de l'eau (33) qui est conçue pour surveiller une qualité d'eau de l'eau de mer dans le régulateur de composants de l'eau de mer (9C), dans lequel l'unité de mesure de la qualité de l'eau (33) comporte un testeur pH conçu pour mesurer un pH et un dispositif de mesure de la teneur en hydrocarbures conçu pour mesurer une concentration de la fraction hydrocarbures ;
un dispositif de commande du traitement des gaz d'échappement qui est conçu pour réguler un état de fonctionnement de l'appareil de dépoussiérage électrostatique (7) et un état de fonctionnement de l'épurateur à eau de mer (9) de manière à ce que la concentration en particules (PM) et la concentration en oxydes de soufre (SO$_2$) des gaz d'échappement traités qui ont été détectées par le détecteur de composants des gaz d'échappement (LA1, LA2, LA3) se situe dans les limites d'une plage prescrite ; et
un dispositif de contrôle des composants de l'eau de mer (9F) qui est conçu pour réguler un état de fonctionnement du régulateur de composants de l'eau de mer (9C) de manière à ce qu'un composant de l'eau de mer détecté par l'unité de mesure de la qualité de l'eau (33) se situe dans les limites d'une plage prescrite, dans lequel le dispositif de contrôle des composants de l'eau de mer (9F) est conçu pour commander le régulateur de composants de l'eau de mer (9C) de manière à ce que la concentration de la fraction hydrocarbures et le pH se situent dans les limites d'une plage fixée.

**2.** Système de traitement des gaz d'échappement d'un moteur diesel marin selon la revendication 1, dans lequel
l'unité de mesure de la qualité de l'eau (33) comporte un compteur de turbidité qui est conçu pour mesurer une concentration d'un composant trouble contenu dans l'eau de mer récupérée de l'épurateur à eau de mer (9).

**3.** Système de traitement des gaz d'échappement d'un moteur diesel marin selon la revendication 2, dans lequel un dispositif de commande d'appareil de dépoussiérage électrostatique de l'appareil de dépoussiérage électrostatique (7) est conçu pour commander l'appareil de dépoussiérage électrostatique (7) sur la base de la turbidité mesurée par l'unité de mesure de la qualité de l'eau (33).

**4.** Système de traitement des gaz d'échappement d'un moteur diesel marin selon l'une quelconque des revendications 2 et 3, dans lequel
le dispositif de commande du traitement des gaz d'échappement comporte un dispositif de commande d'appareil de dépoussiérage électrostatique (7B) qui est conçu pour commander l'appareil de dépoussiérage électrostatique (7), et un dispositif de commande d'épurateur (9E) qui est conçu pour commander une quantité d'eau de mer pulvérisée par l'épurateur à eau de mer (9),
le dispositif de commande d'appareil de dépoussiérage électrostatique (7B), le dispositif de commande d'épurateur (9E) et le dispositif de contrôle des composants de l'eau de mer (9F) qui est conçu pour commander un composant d'eau de mer de l'épurateur à eau de mer (9) sont reliés à une unité de gestion système (71) par un réseau, et

l'unité de gestion système (71) comporte une unité de cumul de données qui est conçue non seulement pour cumuler la concentration en particules (PM), la concentration en $SO_2$ et la concentration en $CO_2$ détectées par le détecteur de composants des gaz d'échappement (LA1, LA2, LA3) en tant que données cumulées, mais également pour cumuler le pH, la turbidité et la concentration de la fraction hydrocarbures mesurées par l'unité de mesure de la qualité de l'eau (33) en tant que données cumulées.

5. Système de traitement des gaz d'échappement d'un moteur diesel marin selon la revendication 4, dans lequel

le régulateur de composants de l'eau de mer (9C) comporte un séparateur de fraction hydrocarbures qui est conçu pour séparer une fraction hydrocarbures de l'eau de mer récupérée de l'épurateur à eau de mer, et un régulateur de pH (32) qui est conçu pour réguler un pH de l'eau de mer récupérée ;

le séparateur de fraction hydrocarbures comporte une unité de traitement électrolytique qui est conçue pour électrolyser l'eau de mer récupérée de l'épurateur à eau de mer afin de séparer la fraction hydrocarbures de l'eau de mer récupérée,

le dispositif de commande d'appareil de dépoussiérage électrostatique (7B) est conçu pour surveiller un état de fonctionnement de l'appareil de dépoussiérage électrostatique (7) sur la base de la concentration en particules (PM) détectée par le détecteur de composants des gaz d'échappement (LA1, LA2, LA3), une valeur de courant appliqué de l'appareil de dépoussiérage électrostatique (7) et la turbidité mesurée par l'unité de mesure de la qualité de l'eau (33), et pour transmettre des informations d'anomalie à l'unité de gestion système (71) lorsqu'une anomalie est détectée dans l'appareil de dépoussiérage électrostatique (7),

le dispositif de commande d'épurateur (9E) est conçu pour surveiller un état de fonctionnement de l'épurateur à eau de mer (9) sur la base de la concentration en $SO_2$ détecté par le détecteur de composants des gaz d'échappement (LA1, LA2, LA3) et d'une valeur de débit de tuyau de l'épurateur à eau de mer (9), et pour transmettre des informations d'anomalie à l'unité de gestion système (71) lorsqu'une anomalie est détectée dans l'épurateur à eau de mer (9),

le dispositif de contrôle des composants de l'eau de mer (9F) est conçu pour surveiller un état de fonctionnement de l'unité de traitement électrolytique et un état de fonctionnement du régulateur de pH sur la base du pH et de la concentration de la fraction hydrocarbures mesurés par l'unité de mesure de la qualité de l'eau (33), d'une valeur de commande de courant de l'unité de traitement électrolytique et d'une valeur de commande d'introduction d'agent régulateur de pH du régulateur de pH, et pour transmettre des informations d'anomalie à l'unité de gestion système (71) lorsqu'une anomalie est détectée dans l'unité de traitement électrolytique ou le régulateur de pH, et

l'unité de gestion système (71) comporte une unité de génération d'alarme (75) qui est conçue pour générer une alarme lorsque l'unité de génération d'alarme reçoit au moins une de ces informations d'anomalie.

6. Système de traitement des gaz d'échappement d'un moteur diesel marin selon la revendication 5, dans lequel

le dispositif de commande du traitement des gaz d'échappement comporte une première unité de détermination de date de maintenance (7c, 64) qui est conçue pour surveiller l'état de fonctionnement de l'appareil de dépoussiérage électrostatique (7) et l'état de fonctionnement de l'épurateur à eau de mer (9) sur la base de la concentration en particules (PM) et de la concentration en oxydes de soufre ($SO_2$) détectées par le détecteur de composants des gaz d'échappement (LA1, LA2, LA3), de la valeur de courant appliqué de l'appareil de dépoussiérage électrostatique (7), de la turbidité mesurée par l'unité de mesure de la qualité de l'eau (33) et de la valeur de débit de tuyau de l'épurateur à eau de mer (9), et pour déterminer des dates de maintenance de l'appareil de dépoussiérage électrostatique (7) et l'épurateur à eau de mer (9) sur la base des résultats de la surveillance, et

le dispositif de contrôle des composants de l'eau de mer (9F) comporte une seconde unité de détermination de date de maintenance (94) qui est conçue pour surveiller l'état de fonctionnement de l'unité de traitement électrolytique et l'état de fonctionnement du régulateur de pH sur la base du pH et de la concentration de la fraction hydrocarbures mesurés par l'unité de mesure de la qualité de l'eau (33) et de la valeur de courant appliqué de l'unité de traitement électrolytique, et pour déterminer des dates de maintenance de l'unité de traitement électrolytique et le régulateur de pH.

7. Système de traitement des gaz d'échappement d'un moteur diesel marin selon l'une quelconque des revendications 2 à 6, dans lequel

le dispositif de contrôle des composants de l'eau de mer (9F) est conçu pour surveiller un composant de l'eau de mer en circulation qui a été récupérée de l'épurateur à eau de mer (9) afin d'être utilisée cycliquement, sur la base du pH, de la turbidité et de la concentration de la fraction hydrocarbures mesurés par l'unité de mesure de la qualité de l'eau (33), et pour transmettre une commande de vidange et de pompage d'eau de mer pour l'eau de mer en circulation au circulateur d'eau de mer (9D) sur la base du résultat de la surveillance, et

lors de la réception de la commande, le circulateur d'eau de mer est conçu pour vidanger l'eau de mer en circulation, puis il pompe une quantité nécessaire d'eau de mer et fournit cycliquement l'eau de mer pompée à l'épurateur à eau de mer (9).

8. Système de traitement des gaz d'échappement d'un moteur diesel marin selon l'une quelconque des revendications 1 à 6, dans lequel, lors de la réception de la commande d'arrêt de circulation émanant du dispositif de contrôle des composants de l'eau de mer (9F), le circulateur d'eau de mer est conçu pour vidanger l'eau de mer soumise à la régulation des composants par le régulateur de composants de l'eau de mer (9C), sans renvoyer l'eau de mer dans l'épurateur à eau de mer (9), et lors de la réception d'une commande de démarrage de circulation émanant du dispositif de contrôle des composants de l'eau de mer (9F), le circulateur d'eau de mer (9D) est conçu pour fournir cycliquement, à l'épurateur à eau de mer (9), l'eau de mer soumise à la régulation des composants par le régulateur de composants de l'eau de mer (9C).

9. Système de traitement des gaz d'échappement d'un moteur diesel marin selon les revendications 2 ou 3, dans lequel un dispositif de commande d'appareil de dépoussiérage électrostatique de l'appareil de dépoussiérage électrostatique (7) est conçu pour commander les courants de l'appareil de dépoussiérage électrostatique (7) de manière à ce que la concentration de la turbidité mesurée par l'unité de mesure de la qualité de l'eau (33) se situe dans les limites d'une plage prescrite.

10. Système de traitement des gaz d'échappement d'un moteur diesel marin selon l'une quelconque des revendications 1 à 9, dans lequel l'appareil de dépoussiérage électrostatique (7) comporte un élément chauffant conçu pour brûler les particules collectées (PM) par la chaleur de l'élément chauffant à chaque période de temps prédéterminée, dans lequel les particules (PM) sont collectées dans l'appareil de dépoussiérage électrostatique sur une surface circonférentielle externe d'une électrode cylindrique (20) et une surface circonférentielle interne d'une électrode de boîtier (21) qui constituent un espace de collecte (22) où l'élément chauffant est placé.

11. Système de traitement des gaz d'échappement d'un moteur diesel marin selon l'une quelconque des revendications 1 à 10, agencé de telle sorte que les gaz d'échappement sans particules (PM) émis par l'appareil de dépoussiérage électrostatique (7) sont fournis à un économiseur (8) et soumis à un échange de chaleur, et la chaleur d'échappement est ainsi récupérée et fournie à l'épurateur à eau de mer (9).

12. Système de traitement des gaz d'échappement d'un moteur diesel marin selon l'une quelconque des revendications 6 à 11, dans lequel le dispositif de commande d'épurateur (9E) du dispositif de commande du traitement des gaz d'échappement est conçu pour déterminer si un résultat arithmétique de la valeur de détection de la concentration en $SO_2$ et de la valeur de détection de la concentration en $CO_2$ (= $SO_2/CO_2$) se situe ou non dans les limites d'une plage qui a été préalablement fixée,

lorsque le résultat arithmétique de $SO_2/CO_2$ est supérieur à la plage prescrite, le dispositif de commande du traitement des gaz d'échappement est conçu pour augmenter la vitesse de rotation de la pompe (45) du circulateur de manière à ce que la valeur du débit du système de tuyauterie augmente, et lorsque le résultat arithmétique de $SO_2/CO_2$ est inférieur à la plage prescrite, le dispositif de commande du traitement des gaz d'échappement est conçu pour diminuer la vitesse de rotation de la pompe (45) du circulateur de manière à ce que la valeur du débit du système de tuyauterie baisse.

13. Système de traitement des gaz d'échappement d'un moteur diesel marin selon l'une quelconque des revendications 7 à 11, dans lequel une unité de génération de valeur de commande de concentration en $SO_2$ (61a) d'un dispositif de commande de pulvérisation (61) dans le dispositif de commande d'épurateur (9E) est conçue pour recevoir une entrée de la concentration en $SO_2$ et de la concentration en $CO_2$ détectées par le troisième analyseur laser (LA3) et est conçue pour exécuter une opération arithmétique $SO_2/CO_2$ et pour générer une valeur cible de concentration en $SO_2$, dans lequel un soustracteur (61b) du dispositif de commande de pulvérisation (61) est conçu pour obtenir un écart de concentration en soustrayant la valeur cible de concentration en $SO_2$ générée et la concentration en $SO_2$ détectée par le troisième analyseur laser (LA3), dans lequel un dispositif de commande asservie (61c) du dispositif de commande de pulvérisation (61) est conçu pour exécuter un procédé de commande PID et calculer ainsi une valeur de commande asservie qui correspond à la concentration en $SO_2$ détectée par le troisième analyseur laser (LA3) et à la valeur cible de concentration en $SO_2$, dans lequel un dispositif de commande prédictive (61d) du dispositif de commande de pulvérisation (61) est conçu pour calculer une valeur de commande prédictive correspondant à une variation de la

concentration en $SO_2$ détectée par le deuxième analyseur laser (LA2) qui survient côté entrée de l'épurateur à eau de mer (9),

dans lequel un additionneur (61e) du dispositif de commande de pulvérisation (61) est conçu pour ajouter la valeur de commande asservie à la valeur de commande prédictive pour calculer une valeur de commande de pulvérisation de l'épurateur à eau de mer, et fournit cette valeur de commande de pulvérisation de l'épurateur à eau de mer au circuit d'entraînement de la pompe,

dans lequel le dispositif de commande de pulvérisation (61) est conçu en outre pour entraîner la pompe de circulation sur la base de la valeur de commande de pulvérisation de l'épurateur à eau de mer.

FIG. 1

**FIG. 2**

**FIG. 3**

**FIG. 4**

START DUST COLLECTION
FEEDFORWARD CONTROL
PROCESS

READ PM CONCENTRATIONS C1 AND C2
OF FIRST AND SECOND LASER ANALYZER — S1

CALCULATE PM REMOVAL RATIO RE — S2
$$RE = (1 - C2/C1) \times 100$$

S3
RE < LL? — N

Y

$N1 = N1 + 1$ — S4

CALCULATE VOLTAGE COMMAND VALUE — S5
$$VH(n) = VH(n-1) + \Delta V$$

OUTPUT VOLTAGE COMMAND
VALUE VH(n) — S6

S7
N — N1 = Ns?

Y

START PM RECOVERY PROCESS — S8

$N1 = 0$ — S9

RETURN

$N1 = 0$ — S10

S11
RE > UL? — N

Y

OUTPUT SET VOLTAGE
COMMAND VALUE VHs — S13

S12
OUTPUT PREVIOUS VOLTAGE
COMMAND VALUE VH(n-1)

RETURN

**FIG. 5**

START DUST COLLECTION FEEDBACK CONTROL PROCESS

READ TURBIDITY T OF TURBIDITY METER —S21

T > UT? —S22
N

Y

N=N+1 —S23

IHa=N·ΔI —S24

OUTPUT CORRECTED CURRENT IHa —S25

N1 = Ns? —S26
N

Y

STOP OUTPUTTING CORRECTED CURRENT IHa —S27

START PM RECOVERY PROCESS —S28

N=0 —S29

RETURN

IS PREVIOUS IHa OUTPUT? —S30
N

Y

STOP OUTPUTTING CORRECTED CURRENT IHa —S31

N=0 —S32

RETURN

**FIG. 6**

36

START OPERATING
STATE MONITORING
PROCESS

READ PM CONCENTRATIONS C1
TO C3 OF FIRST TO THIRD LASER — S41
ANALYZERS

S42
DOES A STATE OF
C3 > Cth LAST FOR A PREDETERMINED Y
PERIOD OF TIME?

N

TRANSMIT ELECTROSTATIC
PRECIPITATOR APPARATUS — S43
ABNORMALITY INFORMATION

S44
DOES A STATE OF N
C1 > C2 > C3 LAST FOR A
PREDETERMINED PERIOD OF TIME?

Y

Na = Na + 1 — S45

Na = 0 — S48

S46
N
NA ≥ Nas?

Y

TRANSMIT LASER ANALYZER — S47
ABNORMALITY INFORMATION

READ PRESENT CURRENT IH(n) — S49

S50
DOES PRESENT CURRENT IH(n) N
FALL WITHIN NORMAL RANGE?

Y

S52
IS PM RECOVERY N
PROCESS ENDED?

TRANSMIT CURRENT — S51
ABNORMALITY INFORMATION

Y

RETURN

S53
HAS A N
PREDETERMINED PERIOD OF
TIME LAPSE?

Y

READ PM COLLECTION RATE DCE — S54

S55
DCE < LL? N

Y

RESET TIMER — S56

S57
IS TIMER BEING SET? Y

RETURN

N

SET TIMER — S58

S59
N IS TIME UP?

Y

TRANSMIT ELECTROSTATIC
PRECIPITATOR APPARATUS — S60
MAINTENANCE INFORMATION

RETURN

**FIG. 7**

37

FIG. 8

38

START SEAWATER
COMPONENT CONTROL
PROCESS

READ OIL CONTENT
CONCENTRATION OC AND pH — S61

OC > OCth? — S62
N

Y

$Ne = Ne + 1$ — S63

$Se = Seb + Ne \cdot \Delta Se1$ — S64

OUTPUT ELECTROLYSIS COMMAND
VALUE Se TO ELECTROLYTIC
TREATMENT UNIT 31 — S65

LpH ≤ pH ≤ UpH? — S66
Y

N

pH < LpH? — S67
N

Y

CALCULATE pH REGULATING AGENT
INPUT AMOUNT Tp WITH REFERENCE TO
INPUT AMOUNT CALCULATION MAP — S68

OUTPUT pH REGULATING AGENT
INTRODUCING COMMAND VALUE Sp TO
pH PROCESSING UNIT 32 TO CONTROL pH
REGULATING AGENT INPUT AMOUNT Tp — S69

RETURN

**FIG. 9**

**FIG. 10**

**FIG. 11**

START CIRCULATED
SEAWATER MONITORING
PROCESS

READ OIL CONTENT
CONCENTRATION OC, pH,
TURBIDITY T — S101

S102

DOES ANY OF OC, pH T EXCEED
CORRESPONDING UPPER LIMIT VALUE
OCth, LpH, OR Tth FOR PREDETERMINED
PERIOD OF TIME?

N

RETURN

Y

OUTPUT DRAINAGE COMMAND BY
SOLENOID VALVE 53 TO
SEAWATER CIRCULATOR 9D — S103

OUTPUT SEAWATER PUMP-UP
COMMAND TO SCRUBBER
CONTROLLER 9E — S104

S105
N

HAS PREDETERMINED
TIME PERIOD ELAPSED?

Y

READ OIL CONTENT
CONCENTRATION OC, pH,
TURBIDITY T — S106

S107

ARE OC, pH, AND T EQUAL TO OR
LOWER THAN UPPER LIMIT VALUES
OCth, LpH, AND Tth?

N

Y

OUTPUT DRAINAGE STOP COMMAND
BY SOLENOID VALVE 53 TO SEAWATER
CIRCULATOR 9D — S108

OUTPUT SEAWATER PUMP-UP STOP
COMMAND TO SCRUBBER
CONTROLLER 9E — S109

RETURN

**FIG. 12**

**FIG. 13**

**FIG. 14**

**FIG. 15**

**FIG. 16**

**FIG. 17**

47

**FIG. 18**

LA1 — FIRST LASER ANALYZER

LA2 — SECOND LASER ANALYZER

LA3 — THIRD LASER ANALYZER

52 — FLOW METER

55 — OIL CONTENT METER

56 — pH METER

57 — TURBIDITY METER

EGC

7B

ELECTROSTATIC PRECIPITATOR APPARATUS CONTROLLER — 9E

- DUST COLLECTION CONTROLLER (7a)
- OPERATING STATE MONITORING UNIT (7b)
- FIRST MAINTENANCE TIME DETERMINATION UNIT (7c)

SCRUBBER CONTROLLER

- SPRAY CONTROLLER (61)
- SWITCH VALVE CONTROLLER (62)
- OPERATING STATE MONITORING UNIT (63)
- FIRST MAINTENANCE TIME DETERMINATION UNIT (64)

SEAWATER COMPONENT CONTROLLER — 9F

- ELECTROLYTIC TREATMENT CONTROLLER (91)
- pH CONTROLLER (92)
- OPERATING STATE MONITORING UNIT (93)
- SECOND MAINTENANCE TIME DETERMINATION UNIT (94)
- DRAINAGE AND PUMP-UP DETERMINATION UNIT (95)

NW

74 — DISPLAY UNIT

72 — STORAGE UNIT (DATA ACCUMULATION UNIT)

71 — SYSTEM MANAGEMENT UNIT

75 — ALARM SOUND GENERATING UNIT

73 — NONVOLATILE MEMORY

76 — COMMUNICATION CONTROLLER

77

80 — HOST CONTROLLER

**EP 2 955 345 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009052440 A
- JP 2004081933 A

- WO 2011065118 A1